(19) **Europäisches Patentamt / European Patent Office / Office européen des brevets**

(11) **EP 2 077 927 B1**

(12) **FASCICULE DE BREVET EUROPEEN**

(45) Date de publication et mention
de la délivrance du brevet:
**16.06.2010 Bulletin 2010/24**

(21) Numéro de dépôt: **07858380.4**

(22) Date de dépôt: **24.09.2007**

(51) Int Cl.:
**B24B 9/14** *(2006.01)*          **G02C 13/00** *(2006.01)*

(86) Numéro de dépôt international:
**PCT/FR2007/001553**

(87) Numéro de publication internationale:
**WO 2008/046975 (24.04.2008 Gazette 2008/17)**

(54) **PROCÉDÉ DE DÉTOURAGE D'UNE LENTILLE OPHTALMIQUE**

VERFAHREN ZUM KONTURFRÄSEN EINES BRILLENGLASES

METHOD FOR TRIMMING AN OPHTHALMIC LENS

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **13.10.2006 FR 0608987**

(43) Date de publication de la demande:
**15.07.2009 Bulletin 2009/29**

(73) Titulaire: **Essilor International
(Compagnie Générale D'Optique)
94220 Charenton le Pont (FR)**

(72) Inventeurs:
• **LEMAIRE, Cédric**
  **94220 Charenton le Pont (FR)**
• **HADDADI, Ahmed**
  **94220 Charenton le Pont (FR)**

(74) Mandataire: **Chauvin, Vincent et al
CORALIS
85 boulevard Malesherbes
75008 Paris (FR)**

(56) Documents cités:
**EP-A1- 0 819 967     EP-A2- 0 583 915
FR-A- 2 870 933**

**Description**

DOMAINE TECHNIQUE AUQUEL SE RAPPORTE L'INVENTION

La présente invention concerne de manière générale le domaine de la lunetterie et plus précisément l'acquisition de la forme du drageoir d'un cercle d'une monture de lunettes et l'usinage de la lentille destinée à être emboîtée dans ce cercle.

Elle concerne plus particulièrement un procédé de détourage d'une lentille ophtalmique, comportant l'usinage de la tranche de la lentille au moyen d'un outil rotatif ayant un axe, l'axe de l'outil et la lentille étant mobiles l'un par rapport à l'autre en rotation autour d'un axe de blocage et en translations axiale et radiale et ces mobilités étant pilotées pour que la tranche de la lentille présente une forme globalement profilée, avec une nervure d'emboîtement apte à s'emboîter dans un drageoir d'un cercle d'une monture de lunettes et, de part et d'autre de cette nervure d'emboîtement, des premier et second rebords.

ARRIÈRE-PLAN TECHNOLOGIQUE

La partie technique du métier de l'opticien consiste à monter une paire de lentilles ophtalmiques sur une monture sélectionnée par un porteur. Ce montage se décompose en trois opérations principales :

- l'acquisition de la forme du drageoir de chacun des deux cercles de la monture de lunettes choisie par le futur porteur, c'est-à-dire de la forme des rainures qui parcourent l'intérieur de chaque cercle de la monture,
- le centrage de chaque lentille qui consiste à déterminer la position qu'occupera chaque lentille sur la monture afin d'être convenablement centrée en regard de la pupille de l'oeil du porteur de manière à ce qu'elle exerce convenablement la fonction optique pour laquelle elle a été conçue,
- le détourage de chaque lentille qui consiste à usiner ou à découper son contour à la forme souhaitée, compte tenu de la forme du drageoir et des paramètres de centrage définis, avec, en fin d'usinage, le biseautage qui consiste à réaliser sur la tranche de la lentille une nervure d'emboîtement destinée à maintenir la lentille dans le drageoir que comporte la monture.

Dans le cadre de la présente invention, on s'intéresse principalement à la première opération d'acquisition de la forme des drageoirs des cercles de la monture de lunettes choisie et à la troisième opération d'usinage de la tranche de la lentille.

En pratique, il s'agit tout d'abord, pour l'opticien, de palper le fond des rainures de chacun des deux cercles de la monture de lunettes sélectionnée afin de déterminer précisément les coordonnées d'une pluralité de points caractérisant la forme d'un brin longitudinal du drageoir de chaque cercle. La connaissance de la forme de ce brin permet à l'opticien de déduire la forme approximative que devra présenter le contour de la lentille à usiner afin de pouvoir être insérée dans le cercle correspondant de la monture.

Pour améliorer la précision de l'emboîtement de la lentille dans le cercle correspondant de la monture, l'opticien peut, comme l'expose le brevet EP 0 819 967 de la demanderesse, procéder à une autre opération d'acquisition par palpage transversal de la forme d'une section du drageoir de manière à prévoir la géométrie de l'emboîtement de la nervure d'emboîtement de la lentille ophtalmique dans le drageoir de la monture de lunettes. L'acquisition de cette forme permet de calculer la profondeur d'enfoncement de la nervure d'emboîtement dans le drageoir afin d'usiner le contour des lentilles avec une précision accrue tenant compte de cette profondeur d'enfoncement.

Dans le cadre des montures fortement basées, la demanderesse a constaté qu'il subsiste une imprécision dans le calcul d'emboîtement, impliquant des difficultés de montage des lentilles dans la monture, voire des impossibilités de montage dues à des interférences entre les rebords du drageoir et le biseau.

Par ailleurs, dans le cas des montures dont les cercles présentent des zones très versées, c'est-à-dire très vrillées, le drageoir présente une forte inclinaison par rapport à la tranche de la lentille, si bien qu'il apparaît un interstice disgracieux entre le cercle de la monture et la tranche de la lentille ophtalmique.

OBJET DE L'INVENTION

Afin d'améliorer la précision et l'esthétisme de l'emboîtement, la présente invention selon la revendication 1 propose un procédé d'acquisition de la forme d'un drageoir tel que défini dans l'introduction, dans lequel, étant donné un premier brin longitudinal du premier rebord et un deuxième brin longitudinal du second rebord, la tranche de la lentille est usinée de telle manière que, en chaque section axiale de la lentille, les traces dans cette section axiale des premier et second brins longitudinaux des deux rebords présentent respectivement des première et seconde distances à l'axe de blocage de la lentille dont la différence est une fonction, dite de dénivelé, non entièrement uniforme.

Un cercle d'une monture de lunettes comporte généralement une face intérieure pourvue en son centre d'un drageoir (sorte de rainure qui s'étend en creux le long du contour intérieur des cercles) bordée de deux méplats. Ce drageoir présente généralement, en section, la forme d'un dièdre, avec une arête de fond bordée par deux flancs.

Selon la forme de la monture choisie par le porteur, l'inclinaison du drageoir et des méplats varie plus ou moins le long du contour intérieur de chaque cercle. Selon l'état de la technique, l'inclinaison du profil de la nervure d'emboîtement sur la tranche de la lentille reste quant à elle généralement constante. Cette différence d'inclinaison entre le drageoir et la nervure d'emboîtement induit une variation de la distance séparant chacun des rebords (de la tranche de la lentille) du méplat correspondant (du cercle de la monture).

En particulier, lorsque le drageoir est très fortement versé, la distance séparant l'un des rebords, celui disposé du côté de la face avant convexe de la lentille, du méplat correspondant peut prendre une valeur importante, ce qui crée un interstice peu esthétique entre le cercle de la monture et la tranche de la lentille ophtalmique.

Par ailleurs, la distance séparant l'autre des rebords du méplat correspondant est très réduite voire nulle, ce qui peut être à l'origine de conflits entre la tranche de la lentille et le cercle de la monture. Ce conflit provoque des difficultés de montage des lentilles dans la monture.

Par conséquent, la présente invention propose d'usiner la tranche de la lentille ophtalmique de telle manière que, une fois la lentille emboîtée dans la monture, la distance entre les rebords de la lentille et les méplats de la monture reste constamment faible tout le long du contour intérieur du cercle. Ainsi, aucun interstice visible et aucun conflit n'apparaît entre le cercle de la monture et la lentille ophtalmique.

Selon un premier mode de réalisation de l'invention, la nervure d'emboîtement étant usinée selon des consignes axiale et radiale de forme donnant respectivement, en fonction de la position du plan de la section axiale considérée de la lentille, les positions axiale et radiale de la trace d'un brin longitudinal directeur de cette nervure d'emboîtement dans cette section axiale, ladite fonction de dénivelé incorpore au moins l'une des consignes radiale et axiale de forme du brin longitudinal directeur en la section axiale considérée le long de la tranche de la lentille.

Selon une caractéristique avantageuse de l'invention, ladite fonction de dénivelé comporte un paramètre caractéristique de la forme globale de l'une des faces optiques de la lentille ophtalmique ou d'un brin longitudinal du drageoir du cercle de la monture de lunettes.

Le versage du drageoir est dû au fait que la monture de lunettes est cambrée. En effet, plus la monture est cambrée, plus le drageoir est incliné. Ainsi, connaissant la forme d'un brin longitudinal du drageoir du cercle de la monture de lunettes, on peut approximer la cambrure de la monture, et donc le versage du drageoir. On peut alors déduire la fonction de dénivelé.

D'autre part, une lentille ophtalmique présente une cambrure propre qui est choisie en fonction de la cambrure du cercle correspondant de la monture, de manière que la lentille puisse être emboîtée dans ce cercle. Ainsi, la forme de la lentille est globalement proportionnelle à la cambrure de la monture de lunettes. Par conséquent, connaissant la forme de la lentille, on peut déterminer le versage du drageoir.

Selon une autre caractéristique avantageuse de l'invention, ledit paramètre caractéristique de forme comporte un rayon d'une base sphérique approchant la forme de la lentille ophtalmique ou d'un brin longitudinal du drageoir du cercle de la monture de lunettes.

Selon une autre caractéristique avantageuse de l'invention, ladite fonction de dénivelé comporte au moins un paramètre qui est déduit des consignes de forme radiale et axiale du brin longitudinal directeur de la nervure d'emboîtement.

Le brin longitudinal directeur de la nervure d'emboîtement s'étend globalement à la surface d'une sphère. Il est possible, en fonction uniquement des coordonnées radiales et axiales d'une pluralité de points du brin longitudinal directeur de la nervure d'emboîtement, de déterminer les caractéristiques de cette sphère inscrite. Connaissant la forme de cette sphère, il est possible de déduire le versage du drageoir et donc la fonction de dénivelé.

Selon une autre caractéristique avantageuse de l'invention, on acquiert par palpage avec ou sans contact la géométrie du profil du drageoir du cercle en au moins une section transversale acquise du cercle et ladite fonction de dénivelé comporte un paramètre dépendant de la géométrie du profil ainsi acquis.

Selon un deuxième mode de réalisation de l'invention conforme à la revendication 10, le procédé comporte l'acquisition de la forme d'un premier brin longitudinal du drageoir, l'acquisition d'un angle d'orientation du profil du drageoir ou de la géométrie du profil du drageoir en une pluralité de sections transversales acquises du drageoir, le détourage de la lentille ophtalmique selon le procédé de la revendication 1, dans lequel ladite fonction de dénivelé est déduite des angles d'orientation acquis ou des géométries acquises du profil du drageoir.

Selon ce mode de réalisation de l'invention, on se réfère uniquement à la forme du drageoir du cercle de la monture de lunettes pour déterminer son versage ou vrillage (c'est-à-dire son orientation) le long du contour du cercle, afin de pouvoir usiner la tranche de la lentille selon la fonction de dénivelé.

Selon une autre caractéristique avantageuse de l'invention, pour déterminer l'angle d'orientation du profil du drageoir en ladite pluralité de sections transversales acquises de ce drageoir, on palpe le profil du drageoir en au moins deux sections transversales palpées de ce drageoir, on calcule l'angle d'orientation de ce profil de drageoir en chacune des sections transversales palpées, et on en déduit par interpolation l'angle d'orientation du profil du drageoir en chaque section transversale acquise de ladite pluralité de sections transversales acquises.

Généralement, le versage d'un drageoir de cercle de lunettes n'est pas exactement proportionnel à la cambrure du cercle de la monture. En outre, il arrive que l'angle d'ouverture du drageoir varie légèrement le long du contour des cercles de la monture. Afin de tenir compte de ces variations de la forme du drageoir le long de son contour, le présent procédé se propose de palper transversalement un nombre restreint de sections du drageoir pour déduire plus précisément l'évolution du versage du drageoir le long du cercle de la monture de lunettes.

Selon une autre caractéristique avantageuse de l'invention, la position du plan de section d'au moins une des sections transversales palpées du drageoir est choisie par calcul, à partir de la forme préalablement acquise du premier brin longitudinal du drageoir, pour que le profil du drageoir en cette section transversale palpée présente un angle d'orientation supérieur ou inférieur à une valeur seuil prédéfinie.

Généralement, les modifications de la forme du drageoir apparaissent dans les zones très cambrées des cercles de la monture, c'est-à-dire dans les zones temporales de la monture ; le profil du drageoir reste sinon sensiblement identique en dehors de ces zones. Ainsi, on palpe ici le profil du drageoir en dehors de ces zones pour déterminer la forme que le drageoir présente sur la majeure partie des cercles de la monture. On peut également palper le profil du drageoir dans ces zones cambrées pour déterminer la forme du drageoir dans ces zones.

Selon une autre caractéristique avantageuse de l'invention, pour déterminer l'angle d'orientation du profil du drageoir en ladite pluralité de sections transversales acquises du drageoir, on acquiert, en plus de la forme du premier brin longitudinal du drageoir, la forme d'au moins un deuxième brin longitudinal du drageoir, décalé par rapport au premier brin longitudinal, et on détermine les positions relatives des premier et deuxième brins longitudinaux.

L'angle d'ouverture d'un dièdre, les coordonnées spatiales du sommet du dièdre et celles d'un point de l'un de ses flancs permettent de caractériser ce dièdre. Ainsi, connaissant l'angle d'ouverture du drageoir et les coordonnées spatiales d'une pluralité de points des premier et deuxième brins longitudinaux, il est possible de déterminer précisément l'inclinaison du profil du drageoir en une pluralité de sections du contour du cercle de la monture de lunettes.

Selon une autre caractéristique avantageuse de l'invention, l'acquisition de la forme des premier et deuxième brins longitudinaux étant réalisée par glissement d'un palpeur le long du drageoir, les premier et second brins longitudinaux possédant chacun trois paramètres de forme correspondant à trois dimensions de l'espace, deux des paramètres de forme du deuxième brin longitudinal sont déterminés en fonction de leurs homologues du premier brin longitudinal et le troisième paramètre de forme est relevé lors de la lecture du deuxième brin longitudinal.

La lecture du premier brin longitudinal est aisée puisqu'un simple appui du palpeur en direction du drageoir le fait glisser le long des flancs du drageoir jusqu'à l'arête de fond. La constance dans cet appui lors de la lecture complète du premier brin longitudinal permet ainsi de s'assurer que le palpeur reste en fond de drageoir. La lecture du deuxième brin longitudinal est moins aisée. Elle nécessite en effet que le palpeur soit maintenu contre l'un des flancs du drageoir, sans glisser vers l'arête de fond ou sans sortir du drageoir. Le procédé se propose pour cela de piloter le palpeur en fonction de deux paramètres de l'arête de fond du drageoir pour s'assurer que le palpeur glisse sur l'un des flancs du drageoir.

Selon une autre caractéristique avantageuse de l'invention, on acquiert, en plus de la forme du premier brin longitudinal et de la forme du deuxième brin longitudinal, la forme d'un troisième brin longitudinal du drageoir, et on déduit l'angle d'orientation du profil du drageoir en chaque section de la pluralité de sections transversales acquises du drageoir en fonction uniquement des positions relatives des traces des premier, deuxième et troisième brins longitudinaux dans ladite section.

Les coordonnées spatiales du sommet d'un dièdre et celles d'un point disposé sur chacun de ses flancs permettent de caractériser ce dièdre. Cette variante de réalisation de l'invention se propose alors de palper trois brins longitudinaux du drageoir afin de déterminer le versage du drageoir sans recourir, pour calculer ce versage, à l'angle d'ouverture du drageoir.

Selon une autre caractéristique avantageuse de l'invention, la nervure d'emboîtement est usinée selon une consigne axiale de détourage calculée, par simulation d'emboîtement de la nervure d'emboîtement dans le drageoir de la monture de lunettes, en fonction de l'angle d'orientation du profil du drageoir ou de la géométrie du profil du drageoir en chaque section de la pluralité de sections transversales acquises du drageoir.

Le versage du drageoir fait varier la position axiale du fond de drageoir, vers la face avant ou vers la face arrière des cercles de la monture de lunettes. Ainsi, le procédé selon l'invention propose de tenir compte de la variation du versage du drageoir dans les calculs d'emboîtement pour usiner, sur la tranche de la lentille, la nervure d'emboîtement à une distance variable de la face avant de la lentille.

Selon une autre caractéristique avantageuse de l'invention, la tranche de la lentille est usinée de telle manière que l'orientation du profil de la tranche de la lentille ophtalmique, par rapport à l'axe de blocage de la lentille, varie le long de la tranche de la lentille selon ladite fonction de dénivelé.

Selon une autre caractéristique avantageuse de l'invention, l'usinage de la tranche de la lentille ophtalmique est réalisé au moyen d'une meule qui présente une gorge pour usiner la nervure d'emboîtement et, de part et d'autre de cette gorge, deux faces pour usiner les rebords et qui, pour l'usinage, tourne autour d'un axe de rotation orientable par rapport à l'axe de blocage de la lentille ophtalmique, et la variation de l'orientation du profil de la tranche de la lentille ophtalmique est réalisée en pilotant l'orientation de l'axe de rotation de la meule par rapport à l'axe de blocage de la lentille ophtalmique durant l'usinage de la tranche de la lentille.

Ainsi, pour faire varier les écarts entre chacun des rebords et l'axe optique de la lentille, le procédé propose de faire varier l'inclinaison de la nervure d'emboîtement et des rebords le long de la tranche de la lentille. En particulier, le calcul de cette inclinaison peut être réalisé en fonction du versage du drageoir (déduit de la forme du brin longitudinal), pour qu'en tout point du cercle, les rebords de la tranche de la lentille soient inclinés de la même manière que les méplats de la face intérieure du cercle.

Selon une autre caractéristique avantageuse de l'invention, la tranche de la lentille est usinée de telle manière que, en chaque section axiale de la lentille, les profils des deux rebords s'étendent globalement suivant des droites sensiblement parallèles à l'axe de blocage de la lentille ophtalmique.

Selon une autre caractéristique avantageuse de l'invention, la nervure d'emboîtement présentant un sommet et deux flancs obliques de part et d'autre de son sommet, l'usinage de la tranche de la lentille ophtalmique est réalisé au moyen d'une meulette comportant deux zones de travail chacune conformée pour usiner simultanément l'un des flancs obliques de la nervure d'emboîtement et le rebord adjacent de la tranche de la lentille ophtalmique, et on pilote la position de la meulette pour que chacune de ses zones de travail usine successivement et dissymétriquement l'un des flancs obliques de la nervure d'emboîtement et le rebord adjacent, puis l'autre des flancs obliques de la nervure d'emboîtement et le rebord adjacent.

Ainsi, pour faire varier les écarts radiaux entre chacun des rebords et l'axe optique de la lentille, le procédé propose d'usiner plus ou moins profondément chaque rebord de la tranche de la lentille.

## DESCRIPTION DÉTAILLÉE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 est une vue d'ensemble en perspective d'un appareil de lecture de forme dans lequel est disposée une monture de lunettes cerclée ;
- la figure 2A est une vue en coupe transversale d'un cercle de monture de lunettes ;
- la figure 2B est une vue en coupe axiale partielle d'une lentille ophtalmique ;
- les figures 3A et 3B sont des vues en coupe axiale partielle d'une lentille ophtalmique emboîtée dans le drageoir d'un des cercles de la monture de lunettes de la figure 1, en deux points distincts de son contour ;
- la figure 4A est une vue schématique en perspective d'une portion d'un des cercles de la monture de lunettes de la figure 1 ;
- la figure 4B est une vue schématique en perspective d'une portion de la lentille ophtalmique de la figure 2B ;
- les figures 5A et 5B sont des schémas de principe illustrant, selon deux variantes de réalisation d'un premier mode de réalisation de l'invention, l'acquisition de la forme du drageoir du cercle de la monture de lunettes de la figure 1 par un palpeur ;
- les figures 6A et 6B sont des schémas de principe illustrant l'acquisition de la forme du drageoir du cercle de la monture de lunettes de la figure 1 par un palpeur selon deux variantes de réalisation de l'invention ;
- la figure 7 est une vue schématique d'une meule de finition biseautant une lentille ophtalmique ;
- la figure 8 est une vue schématique d'une meule de détourage biseautant une lentille ophtalmique selon une variante de réalisation de l'invention ;
- la figure 9 est une vue schématique d'une section transversale d'un cercle de la monture de lunettes de la figure 1 dans lequel est emboîtée une lentille ophtalmique ; et
- les figures 10 et 11 sont des vues en coupe axiale partielle d'une lentille ophtalmique détourée selon l'invention et emboîtée dans le drageoir d'un des cercles de la monture de lunettes de la figure 1.

Pour la mise en oeuvre du procédé selon l'invention, on peut disposer d'un appareil de lecture de forme. Cet appareil de lecture de forme est un moyen bien connu de l'homme du métier et ne fait pas en propre l'objet de l'invention décrite. Il est par exemple possible d'utiliser un appareil de lecture de forme tel que décrit dans le brevet EP0750172 ou commercialisé par Essilor sous la marque Kappa ou sous la marque Kappa CT.

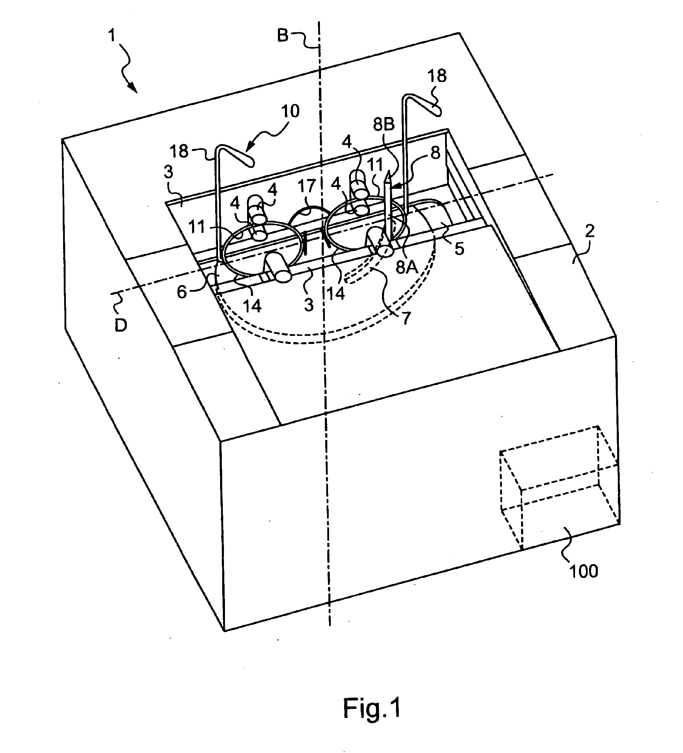

La figure 1 est une vue générale de cet appareil de lecture de forme 1, tel qu'il se présente à son utilisateur. Cet appareil comporte un capot supérieur 2 recouvrant l'ensemble de l'appareil à l'exception d'une portion supérieure centrale dans laquelle est disposée une monture de lunettes 10.

L'appareil de lecture de forme 1 est destiné à relever la forme des contours intérieurs de cette monture de lunettes 10.

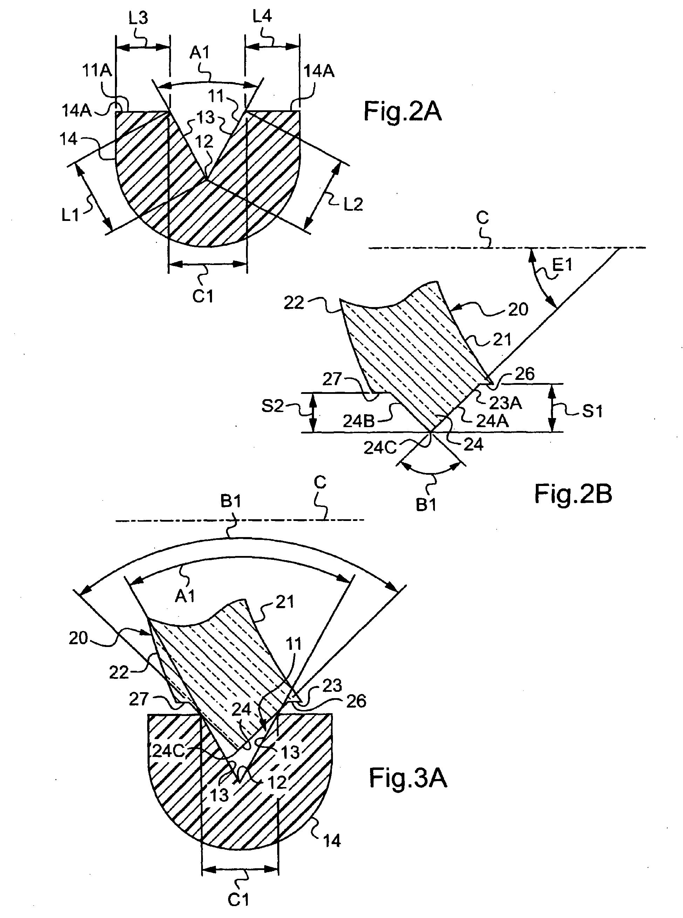

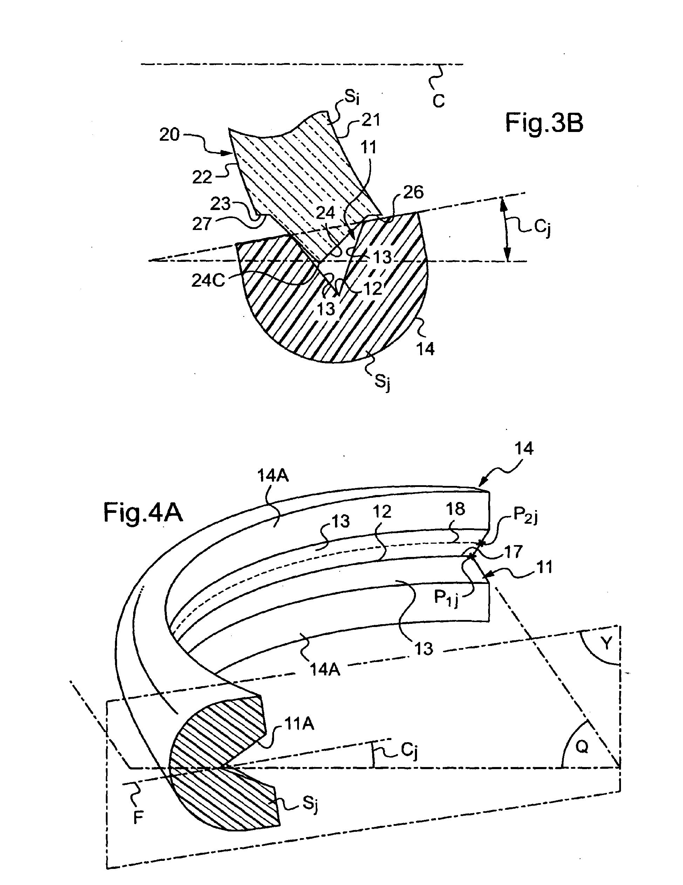

La monture de lunettes 10 est ici de type cerclé. Elle comporte en particulier deux cercles 14 destinés chacun à être positionnés en regard d'un des yeux du porteur lorsque ce dernier porte ladite monture. Comme le représentent les figures 3A et 3B, chacun des cercles 14 de la monture de lunettes 10 est adapté à accueillir une lentille ophtalmique 20.

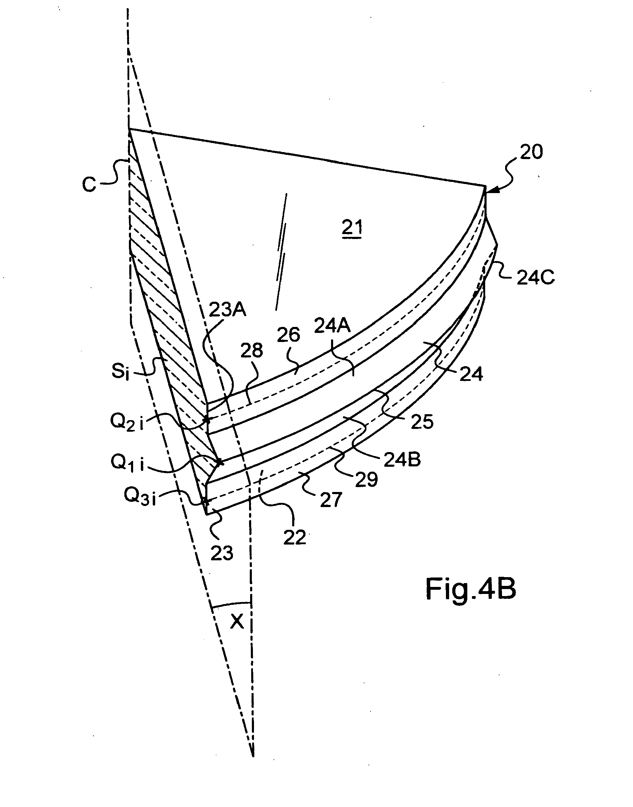

Comme le représentent les figures 2B et 4B, la lentille ophtalmique 20 présente deux faces optiques arrière 21 et avant 22, une tranche 23 et un axe optique C (sensiblement perpendiculaire au plan tangent au centre de la face optique avant de la lentille). La lentille est destinée à être usinée pour présenter sur sa tranche 23 une nervure d'emboîtement 24 (ou biseau) dont la section présente une forme de V, d'angle au sommet B1. Cette nervure d'emboîtement 24 présente donc un sommet 24C en forme d'arête qui court le long de la tranche 23 de la lentille, et, de chaque côté de ce sommet, deux flancs obliques arrière 24A et avant 24B. La tranche de la lentille 20 est également usinée de manière à présenter deux rebords arrière 26 et avant 27 (également appelés pieds de biseau) disposés de chaque côté de la nervure d'emboîtement 24.

Comme le montre la figure 4B, chaque section axiale Si de la lentille est réalisée selon un plan de section X passant par l'axe optique C et définit un profil 23A de la tranche 23 de la lentille. Ce profil comprend ici deux segments parallèles correspondant aux traces des rebords 26, 27 dans ce plan de section X, et deux segments inclinés et sécants correspondant aux traces des flancs obliques 24A, 24B de la nervure d'emboîtement 24.

On peut définir sur la tranche 23 de la lentille des brins longitudinaux qui courent le long de son contour. On considère en particulier un brin longitudinal directeur 25 confondu avec l'arête de sommet 24C de la nervure d'emboîtement 24. Les traces de ces brins longitudinaux dans chaque section axiale Si de la lentille forment des points qui appartiennent au profil 23A de la tranche de la lentille. La trace du brin longitudinal directeur 25 dans la section axiale Si est notée $Q_1i$, tandis que celles des autres brins longitudinaux sont notées $Q_2i,..., Q_ki$.

Comme le représentent les figures 2A et 4A, les deux cercles 14 de la monture de lunettes 10 présentent une face intérieure comportant une rainure intérieure, communément appelée drageoir 11, dont la section présente une forme de dièdre d'angle d'ouverture A1 et de largeur à l'ouverture C1. De chaque côté de ce drageoir, la face intérieure de chaque cercle 14 présente deux rebords 14A. Chaque drageoir 11 présente une arête de fond 12 bordée par deux flancs 13. L'angle d'ouverture A1 de ce dièdre est a priori constant mais peut éventuellement varier le long du contour intérieur de chaque cercle 14. Comme le montre la figure 4A, chaque section transversale Sj du cercle 14 de la monture est réalisée selon un plan de section Y homologue d'un des plans de section X de la lentille (c'est-à-dire que ces plans de coupe sont destinés à être confondus lorsque la lentille est emboîtée dans son cercle de monture de lunettes). Chaque section transversale Sj du cercle 14 définit un profil 11A de drageoir 11. Chacun de ces profils 11A comprend ici deux segments parallèles correspondant aux traces des rebords 14A dans ce plan, et deux segments inclinés et sécants correspondant aux traces des flancs 13 du drageoir 11.

On peut considérer des brins longitudinaux qui appartiennent au drageoir 11 et qui courent le long de son contour. On considère en particulier un premier brin longitudinal 17 qui est confondu avec l'arête de fond 12 du drageoir 11. Les traces de ces brins longitudinaux dans chaque section transversale Sj du cercle forment des points qui appartiennent au profil 11A du drageoir. La trace du premier brin longitudinal 17 dans la section transversale Sj est notée $P_1j$, tandis que les traces des autres brins longitudinaux sont notées $P_2j,..., P_hj$.

La monture de lunettes 10 est cambrée, si bien que les drageoirs 11 sont versés, c'est-à-dire vrillés. Par conséquent, chaque section Sj du drageoir 11 présente une inclinaison propre. Tel que le représentent les figures 3B et 4A, cette inclinaison, qui varie le long des drageoirs 11, est quantifiée, en chaque section Sj du drageoir, à l'aide d'un angle appelé angle de versage Cj. L'angle de versage Cj correspond à l'angle formé par la bissectrice F au drageoir et le plan moyen Q du cercle de la monture (plan qui présente en moyenne l'éloignement minimum aux points de l'arête de fond du drageoir). Cet angle de versage est généralement nul dans les zones nasales des cercles 14 de la monture 10 et maximum dans les zones temporales. La section du drageoir représentée sur la figure 3A correspond ici à une section réalisée au niveau d'une zone nasale du cercle 14 de la monture de lunettes 10 ; la section du drageoir représentée sur la figure 3B correspond à une section réalisée au niveau d'une zone temporale du cercle 14 de la monture.

On comprend, à l'aide des figures 3A et 3B, que le versage des drageoirs 11 a une influence sur la manière selon laquelle la nervure d'emboîtement 24 de la lentille ophtalmique 20 s'emboîte dans le cercle 14 qui lui est associé. Plus précisément, la distance entre le sommet 24C de la nervure d'emboîtement 24 de la lentille ophtalmique 20 et l'arête de fond 12 du drageoir 11 varie en fonction de l'angle de versage Cj. Il convient donc de tenir compte de cette variation en déterminant l'angle de versage Cj en tout point du contour intérieur de chaque cercle 14 de la monture de lunettes 10. En outre, l'espace séparant le rebord arrière 26 de la tranche 23 de la lentille ophtalmique 20 et le rebord 14A correspondant du cercle 14 varie en fonction de l'angle de versage Cj. Il en est de même pour l'espace séparant le rebord avant 27 de la tranche 23 de la lentille ophtalmique 20 et le rebord 14A correspondant du cercle 14. Lorsque la valeur de l'angle de versage Cj est élevée, cet espace peut être important du côté de la face avant de la monture et très faible du côté de sa face arrière. Ce grand espace en face avant est peu esthétique et le manque d'espace en face arrière peu créer un conflit entre la monture et la lentille. Il convient donc de modifier la position relative des rebord 26, 27 de la tranche 23 de la lentille ophtalmique 20 de manière qu'en chaque section transversale Sj du drageoir 11 de la monture, leur distance au cercle 14 de la monture reste sensiblement constante. C'est l'objet de la présente invention.

L'appareil de lecture de forme 1 représenté sur la figure 1 comporte un jeu de deux mâchoires 3 dont au moins une des mâchoires 3 est mobile par rapport à l'autre de sorte que les mâchoires 3 peuvent être rapprochées ou écartées l'une de l'autre pour former un dispositif de serrage. Chacune des mâchoires 3 est de plus munie de deux pinces formées chacune de deux plots 4 mobiles pour être adaptés à serrer entre eux la monture de lunettes 10 afin de l'immobiliser.

Dans l'espace laissé visible par l'ouverture supérieure centrale du capot 2, un châssis 5 est visible. Une platine (non visible) peut se déplacer en translation sur ce châssis 5 selon un axe de transfert D. Sur cette platine est monté tournant un plateau tournant 6. Ce plateau tournant 6 est donc apte à prendre deux positions sur l'axe de transfert D, une première position dans laquelle le centre du plateau tournant 6 est disposé entre les deux paires de plots 4 fixant le cercle droit de la monture de lunettes 10, et une seconde position dans laquelle le centre du plateau tournant 6 est disposé entre les deux paires de plots 4 fixant le cercle gauche de la monture de lunettes 10.

Le plateau tournant 6 possède un axe de rotation B défini comme l'axe normal à la face avant de ce plateau tournant 6 et passant par son centre. Il est adapté à pivoter autour de cet axe par rapport à la platine. Le plateau tournant 6 comporte par ailleurs une lumière 7 oblongue en forme d'arc de cercle à travers laquelle un palpeur 8 fait saillie. Ce palpeur 8 comporte une tige support 8A d'axe perpendiculaire au plan de la face avant du plateau tournant 6 et, à son extrémité libre, un doigt de palpage 8B d'axe perpendiculaire à l'axe de la tige support 8A. Ce doigt de palpage 8B est destiné à suivre par glissement ou éventuellement roulement l'arête de fond 12 de chaque drageoir 11 de la monture de lunettes 10.

L'appareil de lecture de forme 1 comporte des moyens d'actionnement (non représentés) adaptés, d'une première part, à faire glisser la tige support 8A le long de la lumière 7 afin de modifier sa position radiale par rapport à l'axe de rotation B du plateau tournant 6, d'une deuxième part, à faire varier la position angulaire du plateau tournant 6 autour de son axe de rotation B, et, de troisième part, à positionner le doigt de palpage 8B du palpeur 8 à une altitude plus ou moins importante par rapport au plan de la face avant du plateau tournant 6.

En résumé, le palpeur 8 est pourvu de trois degrés de liberté, dont un premier degré de liberté R constitué par l'aptitude du palpeur 8 à se mouvoir radialement par rapport à l'axe de rotation B grâce à sa liberté de mouvement le long de l'arc de cercle formé par la lumière 7, un deuxième degré de liberté TETA constitué par l'aptitude du palpeur 8 à pivoter autour de l'axe de rotation B grâce à la rotation du plateau tournant 6 par rapport à la platine, et un troisième degré de liberté Z constitué par l'aptitude du palpeur 8 à se translater selon un axe parallèle à l'axe de rotation B du plateau tournant 6.

Chaque point lu par l'extrémité du doigt de palpage 8B du palpeur 8 est repéré dans un système de coordonnées correspondant R, TETA, Z. Chaque plan de section X axiale de la lentille 20 et chaque plan de section Y transversale Sj du cercle 14 est défini par sa position angulaire TETAi, TETAj autour de l'axe de blocage C. Deux plans de section axiale X et transversale Sj sont dits homologues lorsque leurs positions angulaires TETAi et TETAj sont égales.

L'appareil de lecture de forme 1 comporte en outre un dispositif électronique et/ou informatique 100 permettant, d'une part, de piloter les moyens d'actionnement de l'appareil de lecture de forme 1, et, d'autre part, d'acquérir et d'enregistrer les coordonnées R, TETA, Z de l'extrémité du doigt de palpage 8B du palpeur 8.

Selon un premier mode de réalisation du procédé d'acquisition selon l'invention et en référence à la figure 1, préalablement au démarrage du palpage du drageoir 11 d'un des cercles 14 de la monture de lunettes 10, la monture est insérée entre les plots 4 des mâchoires 3 de sorte que chacun de ses cercles 14 est prêt à être palpé selon un trajet démarrant par l'insertion du palpeur 8 entre les deux plots 4 qui enserrent la partie inférieure du cercle correspondant de la monture, puis suivant le drageoir 11 de la monture, afin de couvrir toute la circonférence du cercle 14 de la monture de lunettes 10.

En position initiale, lorsque le doigt de palpage 8B est disposé entre les deux plots 4, le dispositif électronique et/ou informatique 100 définit comme nulles la position angulaire TETA et l'altitude Z de l'extrémité du doigt de palpage 8B du palpeur 8.

Pour acquérir la forme du drageoir 11 de chaque cercle 14 de la monture de lunettes 10, le procédé selon l'invention comporte quatre étapes principales.

Au cours d'une première étape, on détermine la forme d'un premier brin longitudinal 17 du drageoir 11 d'un des cercles 14. Pour cela, les moyens d'actionnement font pivoter le plateau tournant 6.

Lors de ce pivotement du plateau tournant 6, les moyens d'actionnement imposent un effort radial constant sur le palpeur 8 en direction du drageoir 11, pour que le doigt de palpage 8B du palpeur 8 glisse le long de l'arête de fond 12 du drageoir 11 sans remonter le long des flancs 13 du drageoir 11.

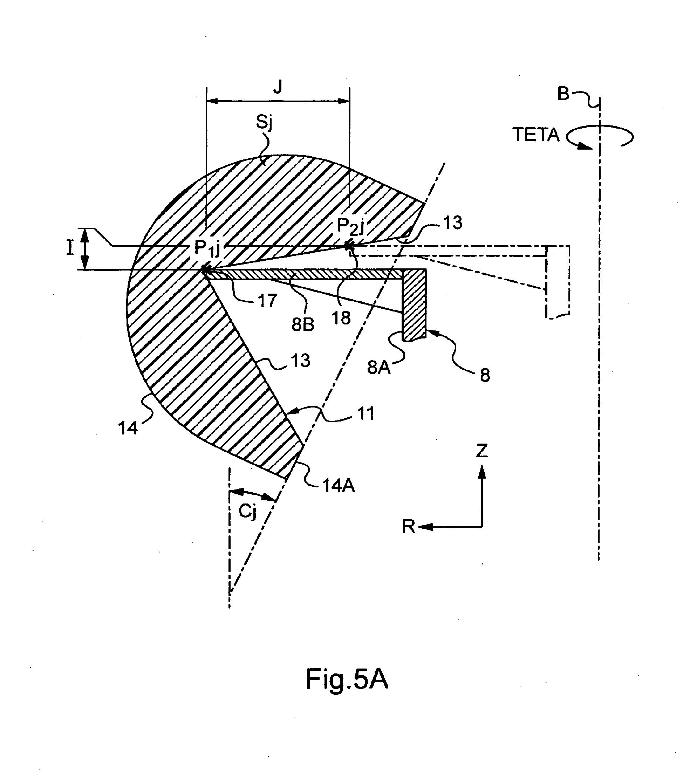

Comme le montrent les figures 4A et 5A, le dispositif électronique et/ou informatique 100 relève pendant la rotation du plateau tournant 6 les coordonnées spatiales $R_1j$, $TETAj$, $Z_1j$ d'une pluralité de points $P_1j$ de l'arête de fond 12 du drageoir 11 (par exemple 360 points séparés angulairement d'un degré). Chaque point $P_1j$ correspond à la trace du premier brin longitudinal 17 dans une section transversale Sj repérée du drageoir 11. A partir des coordonnées spatiales $R_1j$, $TETAj$, $Z_1j$ de ces 360 points, le dispositif électronique et/ou informatique 100 déduit et mémorise une image numérique du contour de l'arête de fond 12 du drageoir 11. Ce contour correspond au contour du premier brin longitudinal 17 du drageoir 11 confondu avec l'arête de fond 12. A l'issue de la révolution complète du plateau tournant 6, les moyens d'actionnement stoppent la rotation de ce dernier.

Au cours d'une deuxième étape, le dispositif électronique et/ou informatique 100 procède à une étape de lecture d'un deuxième brin longitudinal 18 du drageoir qui est décalé par rapport au premier brin longitudinal 17.

Alors que le plateau tournant 6 reste immobile, le dispositif électronique et/ou informatique 100 pilote les moyens d'actionnement de manière à accroître l'altitude Z du palpeur d'une hauteur I, en faisant glisser le doigt de palpage 8B sur l'un des flancs 13 du drageoir 11.

Puis, les moyens d'actionnement font pivoter à nouveau le plateau tournant 6 de telle sorte que le doigt de palpage 8B reste constamment au-dessus de l'arête de fond 12 du drageoir 11, séparé de cette dernière de la hauteur I. Pour cela, les moyens d'actionnement exercent radialement sur le palpeur 8 un effort de rappel en direction du drageoir 11 afin que le drageoir et le palpeur restent toujours au contact l'un de l'autre.

Le dispositif électronique et/ou informatique 100 relève alors les coordonnées spatiales $R_2j$, TETAj, $Z_2j$ de 360 points $P_2j$ du deuxième brin longitudinal 18 du drageoir 11, situés sur l'un des flancs du drageoir. Ces 360 points sont chacun disposés sur l'une des sections transversales Sj repérées du drageoir 11.

On notera alors que l'altitude $Z_2j$ de chaque point $P_2j$ est égale à la somme de la constante I et de l'altitude $Z_1j$ du point $P_1j$ correspondant du premier brin longitudinal 17.

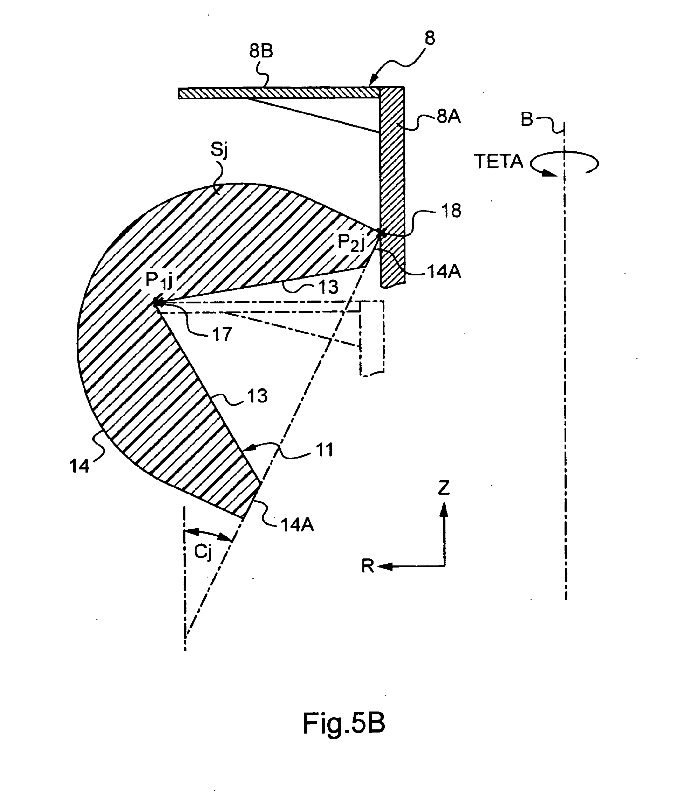

En variante, comme le montre la figure 5B, le deuxième brin longitudinal peut être lu par la tige support 8A du palpeur 8. Dans cette variante, le deuxième brin longitudinal 18 s'étend le long d'un des rebords 14A du drageoir 11. Plus précisément, en chaque section transversale Sj du drageoir 11, la trace $P_2j$ du deuxième brin longitudinal 18 correspond au point du profil 11A du drageoir 11 dont la coordonnée radiale $R_2j$ est la plus faible.

Pour le palpage de ce deuxième brin, les moyens d'actionnement du palpeur disposent le doigt de palpage 8B du palpeur 8 à une altitude Z supérieure à l'altitude maximale du cercle de la monture de manière à éviter toute interférence entre le cercle de la monture et le doigt de palpage. Le palpeur 8 est alors piloté radialement en direction de la face intérieure du cercle 14 de manière que sa tige support 8A vienne au contact du cercle. Puis, les moyens d'actionnement font pivoter à nouveau le plateau tournant 6 de manière à relever la position radiale $R_2j$ des traces $P_2j$ du deuxième brin longitudinal 18 dans les 360 sections transversales Sj repérées du cercle. Les altitudes $Z_2j$ de ces traces sont ensuite déduites des positions radiales $R_2j$ mesurées et de la géométrie du profil du drageoir 11 (que l'on déterminera au cours d'une troisième étape).

Quoi qu'il en soit, au cours d'une troisième étape, le dispositif électronique et/ou informatique 100 procède à une étape de lecture d'un profil 11A quelconque d'une section Sj du drageoir 11. En pratique, cette section transversale Sj palpée est située à proximité de la zone nasale du cercle 14 de la monture de lunettes 10.

Pour réaliser cette lecture, le plateau tournant 6 étant immobilisé, le dispositif électronique et/ou informatique 100 pilote les moyens d'actionnement de manière à imposer au palpeur 8 un effort radial constant vers le drageoir 11 et à modifier l'altitude Z du palpeur 8 si bien qu'il glisse sur l'un puis l'autre des deux flancs 13 du drageoir 11, ainsi que sur les rebords 14A du cercle 14. Ce palpage du profil 11A du drageoir 11 permet de déterminer avec précision la valeur de l'angle d'ouverture A1 du dièdre formé par ce drageoir 11.

Au cours d'une quatrième étape, on déduit les variations de l'angle de versage Cj en fonction des positions relatives des premier et deuxième brins longitudinaux 17, 18. Plus précisément, on détermine, en chaque section transversale Sj du drageoir, l'angle de versage Cj en fonction de la position relative des traces $P_1j$, $P_2j$ des premier et deuxième brins longitudinaux 17, 18 dans cette section transversale Sj.

Dans ce mode de réalisation de l'invention, on fait l'approximation que l'angle d'ouverture A1 du drageoir 11 de la monture de lunettes 10 reste constant tout le long du contour intérieur des cercles 14.

Le calcul de l'angle de versage est réalisé pour chacune des 360 sections Sj du drageoir selon la formule :

$$Cj = A1\,/\,2 - \arctan[\,I\,/\,(R_1j - R_2J)\,]$$

En variante, la lecture du deuxième brin longitudinal du drageoir 11 peut être réalisée différemment.

Selon cette variante, pour lire le deuxième brin longitudinal 18, alors que le plateau tournant 6 est immobile, le dispositif électronique et/ou informatique 100 pilote les moyens d'actionnement de manière, d'une part, à imposer au palpeur 8 un effort de rappel vertical vers le haut constant, et, d'autre part, à diminuer la position radiale du palpeur de sorte que ce dernier soit séparé radialement de l'arête de fond 12 du drageoir 11 d'une distance J.

Puis, les moyens d'actionnement font pivoter le plateau tournant 6 de telle sorte que le doigt de palpage 8B reste constamment au-dessus de l'arête de fond 12 du drageoir 11, à une distance radiale de cette dernière égale à la distance J.

Le dispositif électronique et/ou informatique 100 relève alors les coordonnées spatiales $R_2j$, TETAj, $Z_2j$ de 360 points $P_2j$ du deuxième brin longitudinal 18 du drageoir 11.

On remarquera que les coordonnées radiales $R_2j$ des points $P_2j$ sont égales aux coordonnées radiales $R_1j$ des points $P_1j$ correspondants, auxquelles on soustrait la constante J.

Selon cette variante, le calcul de l'angle de versage est réalisé pour chacune des 360 sections Sj du drageoir selon la formule :

$$Cj = A1 / 2 - \arctan [ (Z_2j - Z_1j) / J ]$$

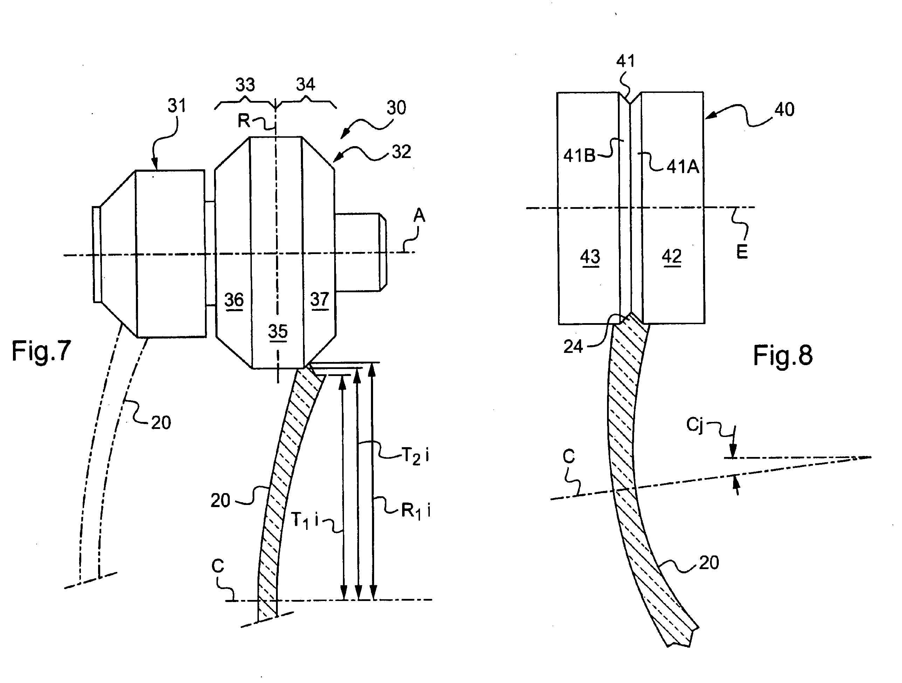

Quoi qu'il en soit, au cours d'une cinquième étape plus particulièrement représentée sur la figure 7, on procède au détourage et au biseautage de la lentille ophtalmique 20.

Pour le détourage de la lentille, on utilise une meule cylindrique (non représentée) adaptée à réduire les rayons de la lentille en fonction de la forme du premier brin longitudinal du drageoir et de l'angle de versage Cj.

Plus précisément, on connaît grâce à la première étape de lecture de la forme de l'arête de fond 12 du drageoir 11, la forme du premier brin longitudinal du drageoir 11. On connaît également l'inclinaison du drageoir le long du cercle 14.

En résumé, en chaque section transversale Sj du drageoir (à laquelle correspond une section axiale Si homologue de la lentille ophtalmique 20), on connaît les coordonnées spatiales $R_1j$, TETAj, $Z_1j$ de la trace $P_1j$ du premier brin longitudinal 17 dans cette section, ainsi que la valeur de l'angle de versage Cj du drageoir 11.

Connaissant en outre la largeur à l'ouverture C1 du drageoir 11 et l'angle au sommet B1 de la nervure d'emboîtement 24 (qui dépend de la forme de la meule utilisée), le dispositif électronique et/ou informatique 100 peut calculer la forme et la position que doit présenter l'arête de sommet 24C de la nervure d'emboîtement 24 par rapport au premier brin longitudinal 17 pour que l'emboîtement de la lentille dans son cercle se fasse correctement. Ces caractéristiques calculées fournissent au dispositif de détourage une consigne de rayon de détourage qui donne, en section axiale Si de la lentille, le rayon que doit présenter le sommet de la nervure d'emboîtement 24 de la lentille.

Pour détourer la lentille ophtalmique 20, on la bloque selon son axe optique de manière qu'elle puisse pivoter autour de cet axe, appelé axe de blocage C. La meule cylindrique est quant à elle adaptée à tourner autour d'un axe de rotation parallèle à cet axe de blocage C. La meule est ensuite mise en rotation au contact de la lentille de manière à réduire, pour chaque position angulaire TETAi de la lentille autour de l'axe de blocage C, le rayon de la lentille à la longueur voulue. A l'issue de ce détourage, la tranche 23 de la lentille présente un profil plat.

Puis, on procède ensuite au biseautage de la lentille pour former le long de sa tranche 23 la nervure d'emboîtement 24.

Pour ce biseautage, on utilise un outil de finition 30 tel que celui représenté sur la figure 7, qui comporte une meulette de polissage 31 accolée à une meulette de finition 32.

La meulette de finition 32 comporte une face de travail cylindrique 35 encadrée par deux faces de travail coniques 36, 37, toutes trois de révolution autour d'un axe de rotation A de l'outil de finition 30. Les deux faces de travail coniques 36, 37 sont symétriques par rapport au plan médian R de la face de travail cylindrique. Le plan médian R délimite deux zones de travail 33, 34 de la meulette de finition 32. L'une de ces zones de travail 33 est conformée pour usiner simultanément l'un des flancs obliques 24A de la nervure d'emboîtement 24 de la lentille ophtalmique 20 et le rebord 26 correspondant, tandis que l'autre de ces zones de travail 34 est conformée pour usiner simultanément l'autre des flancs obliques 24B de la nervure d'emboîtement 24 et le rebord correspondant 27.

La lentille ophtalmique est maintenue par des arbres de support (non représentés), lui permettant de pivoter autour de l'axe de blocage C. L'axe de rotation A de l'outil de finition 30 est ici sensiblement parallèle à l'axe de blocage C de la lentille ophtalmique 20.

Lors de l'usinage de la tranche 23 de la lentille ophtalmique 20, le dispositif électronique et/ou informatique 100 pilote la position axiale de la meulette de finition 32 par rapport à l'axe de blocage C de la lentille ophtalmique 20 pour mettre une première de ces zones de travail 33, 34 au regard de l'une des arêtes de la tranche de la lentille ophtalmique 20. Puis, ce dispositif électronique et/ou informatique 100 pilote la position radiale de la meulette de finition 32 par rapport à l'axe de blocage C afin de mettre l'outil au contact de la lentille. La rotation de l'outil et le pivotement de la lentille sont simultanément commandés afin d'usiner l'un des flancs oblique 24A de la nervure d'emboîtement et le rebord 26 adjacent. L'usinage de ce flanc de la nervure d'emboîtement 24 est réalisé de telle sorte que, en chaque section axiale Si de la lentille, le rebord 26 de la tranche de la lentille soit situé à une distance radiale $T_1i$ de l'axe de blocage C de la lentille.

L'usinage du deuxième flanc oblique 24B de la nervure d'emboîtement est réalisé à la suite de cet usinage du premier flanc oblique. Ce deuxième usinage est réalisé dissymétriquement par rapport au premier flanc oblique. L'usinage de ce flanc oblique avant 24B de la nervure d'emboîtement 24 est réalisé de telle sorte que, en chaque section axiale Si de la lentille, le rebord 27 de la tranche 23 de la lentille soit situé à une distance radiale $T_2i$ de l'axe de blocage de la lentille.

Ainsi, les deux rebords 26, 27 de la tranche de la lentille s'étendent, dans chaque section axiale Si de la lentille, suivant des droites sensiblement parallèles à l'axe de blocage C de la lentille ophtalmique.

Selon une caractéristique particulièrement avantageuse de l'invention, la différence entre les distances radiales $T_1i$, $T_2i$ est une fonction de la section axiale considérée Si de la lentille ophtalmique, qui est appelée fonction de dénivelé et qui n'est pas uniforme. L'équation de cette fonction de dénivelé est calculée en fonction des variations de l'angle de versage Cj du drageoir 11. Elle est calculée préalablement à l'usinage de la lentille afin de pouvoir piloter la meulette de finition comme désiré. Un exemple d'un tel calcul est fourni à la fin de cet exposé.

Selon une variante de réalisation de l'invention représentée sur la figure 8, les deux flancs de la nervure d'emboîtement 24 de la lentille ophtalmique 20 peuvent être réalisés simultanément. L'outil utilisé pour le biseautage est ici une meule de biseautage 40 classique qui présente une forme de cylindre pourvu, à mi-hauteur, d'une gorge de biseautage 41 et qui est adaptée à pivoter autour d'un axe de rotation E confondu avec son axe de révolution. La gorge de biseautage 41 présente la forme inverse de la forme de la nervure d'emboîtement à réaliser sur la tranche de la lentille ophtalmique 20. Elle présente donc deux flancs 41A, 41B et est bordée de deux faces cylindriques 42, 43 conformées pour usiner les rebords 26, 27 de la tranche 23 de la lentille ophtalmique.

La lentille ophtalmique 20 est ici également bloquée par des arbres de support (non représentés) de manière qu'elle puisse pivoter autour de son axe de blocage C.

Avantageusement, l'axe de rotation E de la meule de biseautage 40 est orientable par rapport à l'axe de blocage C de la lentille ophtalmique 20. Le dispositif électronique et/ou informatique 100 pilote dynamiquement, lors du biseautage de la lentille ophtalmique 20, l'orientation de ces deux axes E et C l'un par rapport à l'autre afin de faire varier l'orientation des rebords et de la nervure d'emboîtement 24 le long de la tranche 23 de la lentille ophtalmique 20.

Ce pilotage est réalisé de manière que, en chaque section axiale Si de la lentille, l'axe de blocage C est incliné par rapport à l'axe de rotation E d'un angle égal à l'angle de versage Cj du profil 11A du drageoir 11 dans la section transversale Sj du drageoir homologue à la section axiale Si considérée de la lentille.

Par conséquent, la nervure d'emboîtement 24 de la lentille ophtalmique 20 est inclinée de la même manière que le drageoir 11 du cercle 14 destiné à accueillir la lentille.

Généralement, les drageoirs de montures de lunettes présentent un angle d'ouverture A1 qui est constant dans les zones peu versées des cercles des montures mais qui varie dans les zones plus versées. Par conséquent, les calculs précédents du versage Cj du drageoir 11 de la monture présentent de légères imprécisions.

Selon une première variante de réalisation de l'invention, le calcul du versage Cj du drageoir 11 peut être réalisé sans recourir à l'angle d'ouverture A1 du drageoir 11.

Selon cette variante de réalisation de l'invention, les deux premières étapes d'acquisition de la forme du drageoir 11 sont identiques (palpage des premier et second brins longitudinaux 17, 18).

Au cours d'une troisième étape, le dispositif électronique et/ou informatique 100 procède au palpage d'un troisième brin longitudinal 19 du drageoir. Les deuxième et troisième brins longitudinaux 18, 19 sont chacun disposés sur un flanc 13 distinct du drageoir 11.

La lecture de la forme du troisième brin longitudinal 19 est réalisée de la même manière que celle de la forme du deuxième brin longitudinal 18, mais en conservant le palpeur 8 contre l'autre flanc 13 du drageoir 11, en dessous de l'arête de fond 12 du drageoir 11, séparé de ce dernier de la hauteur I. Ainsi, le dispositif électronique et/ou informatique 100 relève les coordonnées spatiales $R_3j$, TETAj, $Z_3j$ de 360 points $P_3j$ du troisième brin longitudinal 19 du drageoir 11.

On notera alors que l'altitude $Z_3j$ de chaque point $P_3j$ est égale à l'altitude $Z_1j$ du point $P_1j$ correspondant du premier brin longitudinal 17 à laquelle on retranche la constante I.

Au cours d'une quatrième étape, on calcule l'angle de versage Cj de chacune des sections Sj du drageoir en fonction uniquement des positions relatives des points $P_1j$, $P_2j$, $P_3j$ de chaque section Sj du drageoir 11.

Ainsi, pour chaque section Sj, l'angle de versage Cj peut être calculé selon la formule :

$$Cj = 0{,}5 \cdot [\, arctan\,(\, I/(R_1j - R_3j)\,) - arctan\,(\, I/(R_1j - R_2j)\,)\,]$$

On note ici que le relevé des contours des trois brins longitudinaux 17, 18, 19 permet de réaliser un calcul précis du versage qui ne dépend pas de l'angle d'ouverture A1 du drageoir 11 (cet angle peut éventuellement être variable le long du contour intérieur du cercle 14, ce qui fausserait les calculs).

Dans le cas où le drageoir présente une section, non pas en forme de dièdre, mais selon une autre forme telle qu'un demi-cercle, cette formule peut bien évidemment être adaptée. A cet effet, le dispositif électronique et/ou informatique pourra comporter en mémoire une pluralité de formules mathématiques chacune adaptées à une forme de drageoir. Afin de déterminer quelle formule choisir, le dispositif électronique et/ou informatique pourra exploiter le glissement du palpeur le long des flancs du drageoir (lorsque le palpeur sort du fond du drageoir pour se placer à la hauteur du deuxième brin longitudinal) pour déterminer la forme de la section du drageoir, et donc la formule mathématique la mieux adaptée à cette forme de drageoir.

Quoi qu'il en soit, à l'issue du calcul du versage en tout point du contour intérieur de chaque cercle 14, le dispositif électronique et/ou informatique 100 peut déterminer très précisément la fonction de dénivelé pour l'usinage de la lentille ophtalmique 20, de manière que cette dernière puisse s'emboîter très précisément dans le drageoir 11 correspondant de l'un des cercles 14 de la monture de lunettes.

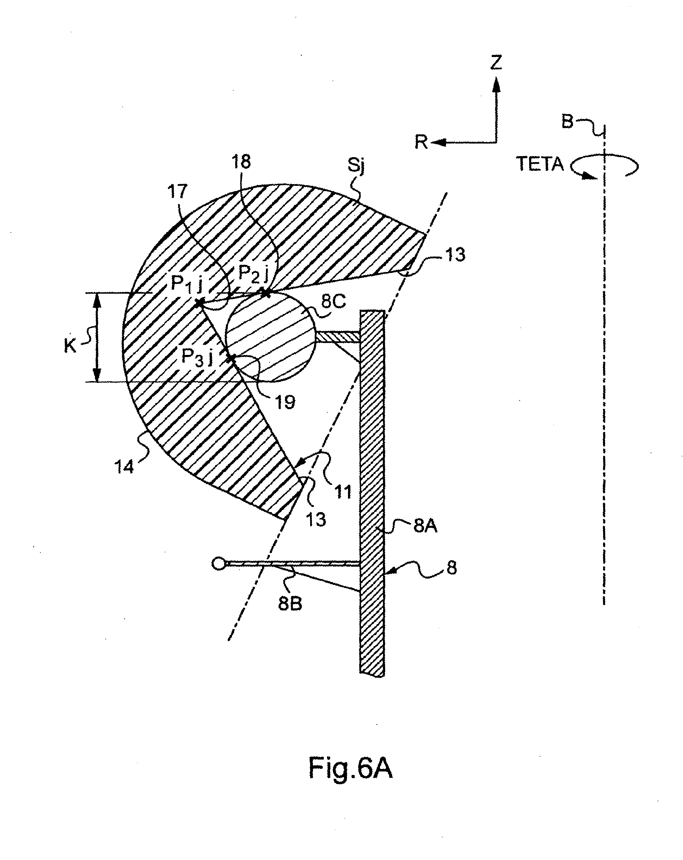

En variante, comme le représente la figure 6A, les lectures des deuxième et troisième brins longitudinaux 18, 19 peuvent être réalisées simultanément à l'aide d'un palpeur 8 adéquat.

Selon cette variante, le palpeur 8 présente à son extrémité supérieure, non seulement un doigt de palpage 8B identique à celui précédemment décrit, mais aussi une sphère de palpage 8C de diamètre K important. Cette sphère de palpage est, dans l'exemple illustré par la figure 6A, disposée au sommet de la tige support 8A, suffisamment au-dessus (ou en dessous) du doigt de palpage 8B pour éviter tout conflit du doigt de palpage avec le cercle 14 lors du palpage du drageoir avec la sphère de palpage.

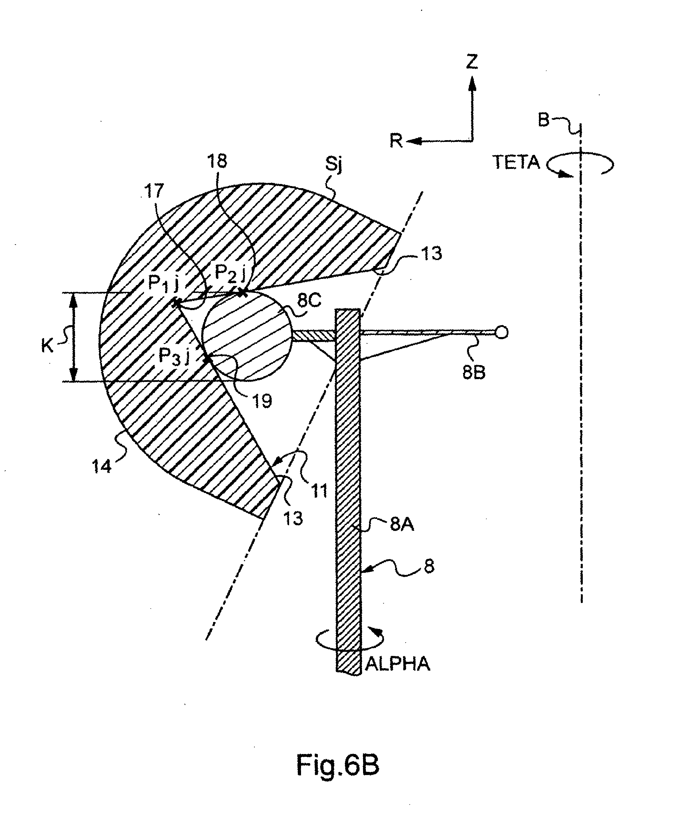

En variante, comme le représente la figure 6B, la sphère de palpage 8C peut être disposée de manière diamétralement opposée au doigt de palpage 8B par rapport à l'axe de la tige support 8A. Le palpeur 8 doit alors présenter un degré de liberté supplémentaire, constitué par une mobilité ALPHA de pivotement autour de l'axe de sa tige support 8A, pour pouvoir réaliser un demi-tour sur lui-même. La sphère de palpage présente ainsi, à la faveur de ce pivotement, une position interchangeable avec le doigt de palpage 8B pour la lecture des drageoirs 11.

Quoi qu'il en soit, le diamètre K de cette sphère est calibré et sa position par rapport à l'extrémité du doigt de palpage 8B est connue de sorte que les positions des points de sa surface sphérique peuvent être déterminées par le dispositif électronique et informatique 100.

Pour le palpage des deuxième et troisième brins longitudinaux, le dispositif électronique et/ou informatique 100 pilote les mobilités du palpeur 8 pour mettre la sphère de palpage 8C au contact du drageoir 11. Son diamètre K étant important, la sphère de palpage 8C n'entre pas au contact de l'arête de fond 12 du drageoir 11, mais plutôt au contact de deux points $P_2j$, $P_3j$ disposés chacun sur l'un des flancs du drageoir 11.

Puis, les moyens d'actionnement font pivoter le plateau tournant 6 de sorte que la sphère de palpage 8C palpe l'ensemble du contour du cercle 14 de la monture, en restant au contact des flancs 13 du drageoir 11.

Connaissant la géométrie de l'arête de fond 12 du drageoir 11, le dispositif électronique et/ou informatique 100 détermine quels sont les points de la surface sphérique de sa sphère de palpage 8C qui sont en contact avec le drageoir 11 et il relève ainsi les coordonnées spatiales $R_2j$, $TETAj$, $Z_2j$ et $R_3j$, $TETAj$, $Z_3j$ des points $P_2j$, $P_3j$ des deuxième et troisième brins longitudinaux 18, 19.

Le calcul du versage du drageoir et l'usinage de la tranche 23 de la lentille 20 sont alors réalisés selon un procédé analogue à celui exposé précédemment.

Selon une deuxième variante de réalisation de l'invention, il est possible d'affiner la précision du calcul de l'angle de versage Cj dans les zones très versées de la monture. Selon cette variante, les deux premières étapes de lecture des premier et deuxième brins longitudinaux 17, 18 et la troisième étape de lecture d'un profil 11A du drageoir 11 restent identiques.

En revanche, la quatrième étape de calcul du versage du drageoir est légèrement modifiée. Dans un premier temps, le dispositif électronique et/ou informatique 100 calcule, selon la formule mathématique fournie précédemment, une approximation de l'angle de versage Cj du drageoir en une pluralité de sections transversales Sj du drageoir 11 (figure 4A). Puis, le dispositif électronique et/ou informatique 100 procède au palpage de profils 11A de sections Sj supplémentaires du drageoir 11.

Pour identifier les profils de drageoir à palper, le dispositif électronique et/ou informatique 100 choisit un plan de section Y dans lequel l'angle de versage approximé Cj du drageoir est inférieur à une valeur seuil prédéterminée, et un ou plusieurs autres plans de section Y dans lesquels l'angle de versage approximé Cj du drageoir est supérieur à cette valeur seuil. Il commande ensuite le palpage des profils du drageoir dans ces plans de section Y identifiés. On sait que le profil du drageoir varie peu dans les zones peu versées du cercle 14, c'est la raison pour laquelle on ne palpe le profil du drageoir qu'en une section peu versée du drageoir. En revanche, la géométrie du profil du drageoir peut sensiblement évoluer dans les zones versées des cercles de la monture (zone temporale), c'est la raison pour laquelle on palpe le profil du drageoir en plusieurs sections versées du drageoir.

En variante, le dispositif électronique et/ou informatique 100 peut directement palper plusieurs sections transversales Sj prédéfinies du drageoir. Selon cette variante, le dispositif ne précède pas au calcul d'une approximation de l'angle de versage Cj du drageoir afin de déterminer quelles sections transversales palper. Au contraire, il procède directement au palpage de plusieurs profils du drageoir, par exemple au nombre de deux ou trois, dont les positions angulaires TETAj sont prédéterminées (par exemple 0 degré pour palper le profil d'une partie basse du cercle, 90 degrés pour palper le profil d'une partie temporale du cercle, et 180 degrés pour palper le profil d'une partie haute du cercle).

En variante encore, si le dispositif électronique et/ou informatique 100 est relié à une interface graphique qui fournit à l'utilisateur une image du premier brin longitudinal 17 préalablement palpé, l'utilisateur peut directement pointer sur l'image affichée les sections transversales Sj qu'il souhaite que le palpeur palpe.

Quoi qu'il en soit, le palpage de deux ou trois profils 11A du drageoir 11 permet de déterminer les angles d'ouverture A1 des dièdres formés par le drageoir 11, au niveau de chacune de ces sections transversales Sj lues. Le dispositif électronique et/ou informatique 100 peut alors calculer approximativement, à partir de ces angles d'ouverture, les variations de l'angle d'ouverture A1 du drageoir 11 tout le long du contour intérieur du cercle 14 de la monture de lunettes 10.

L'angle d'ouverture A1 étant alors une variable, le dispositif électronique et/ou informatique 100 procède à un calcul affiné du versage du drageoir au moyen de la formule mathématique :

$$Cj = A1_{TETA}/2 - \arctan\left[\,(Z_2j - Z_1j)\,/J\,\right]$$

Selon une troisième variante de réalisation de l'invention, le dispositif électronique et/ou informatique détermine l'angle de versage Cj d'une pluralité de sections transversales Sj du drageoir 11 en ne palpant qu'un seul brin longitudinal.

Selon cette variante, la première étape de lecture de la forme du premier brin longitudinal 17 reste identique.

Au cours d'une deuxième étape, le dispositif électronique et/ou informatique 100 pilote les moyens d'actionnement du palpeur 8 pour que ce dernier palpe une pluralité de sections transversales Sj du drageoir 11 dont les positions angulaires TETAj sont prédéterminées. Il peut par exemple commander le palpage de dix profils 11A du drageoir répartis régulièrement le long du contour du cercle 14.

Au cours d'une troisième étape, le dispositif calcule l'angle de versage Cj de chacune de ces dix sections du drageoir. Il en déduit ensuite, par un calcul d'interpolation classique, l'angle de versage Cj de l'ensemble des profils 11A du drageoir. L'étape d'usinage de la tranche 23 de la lentille ophtalmique 20 est alors réalisée de manière identique.

Selon d'autres variantes de réalisation de l'invention, il est possible, au cours de la première étape du procédé précédemment décrit, d'acquérir la forme d'un ou plusieurs brins longitudinaux du drageoir 11 et la forme d'un ou plusieurs profils 11A du drageoir 11 de manière différente.

Il est par exemple possible d'acquérir ces formes au moyen d'un registre de base de données. Dans cet exemple, le registre de base de données comporte une pluralité d'enregistrements chacun associé à un type référencé de montures de lunettes (c'est-à-dire à une forme de monture de lunettes). Plus précisément, chaque enregistrement comporte un identifiant qui correspond au type de monture de lunettes considéré, et un tableau de valeurs référençant par exemple les coordonnées spatiales des 360 points $P_1j$ caractéristiques de la forme du premier brin longitudinal 17. Ainsi, pour acquérir la forme de ce brin, l'utilisateur recherche dans la base de données l'enregistrement dont l'identifiant correspond à la monture de lunettes choisie par le porteur. Puis, les valeurs référencées dans cet enregistrement sont ensuite exploitées par le dispositif électronique et/ou informatique 100 pour calculer le versage du drageoir 11 le long du cercle de la monture de lunettes.

Un autre exemple permettant d'acquérir la forme du drageoir consiste à lire, par imagerie laser, la géométrie du drageoir dans son ensemble, en trois dimensions. Le document EP1353141 de la demanderesse expose un exemple de dispositif et de procédé permettant de réaliser cette lecture tridimensionnelle. On comprend que cette lecture fournit la forme d'une pluralité de brins longitudinaux du drageoir et la géométrie du profil du drageoir en une pluralité de sections transversales du drageoir. Le dispositif électronique et/ou informatique peut donc déterminer en chaque section du drageoir, l'angle de versage du profil du drageoir.

Selon un autre mode de réalisation de l'invention, la détermination de la fonction de dénivelé est réalisée en considérant le fait que le cercle de la monture de lunettes est globalement circonscrit à la surface d'une sphère.

Selon ce mode, au cours d'une première étape, on lit la forme d'un brin longitudinal 17 du drageoir 11. Cette lecture peut par exemple être réalisée en palpant l'arête de fond 12 du drageoir 11 comme expliqué précédemment. Cette lecture fournit les coordonnées $R_1j$, TETAj, $Z_1j$ d'une pluralité de points $P_1j$ du premier brin longitudinal 17.

L'objectif est alors de déterminer des consignes axiale et radiale de forme pour le détourage et le biseautage de la lentille ophtalmique au moyen de la meulette de finition 32 (figure 7). Ces consignes doivent fournir les coordonnées $R_1i$, TETAi, $Z_1i$ d'une pluralité de points $Q_1i$ du brin longitudinal directeur 25 de la nervure d'emboîtement 24 à former sur la tranche de la lentille 23. Elles doivent également fournir les distances $T_1i$, $T_2i$ à l'axe de blocage C de chacun des rebords 26, 27 de la tranche de la lentille.

Les distances $T_1i$, $T_2i$ à l'axe de blocage C de chacun des rebords 26, 27 peuvent être calculées soit uniquement à partir de l'angle d'ouverture A1 du drageoir 11 et du versage du drageoir 11, soit en déterminant section par section, la configuration de l'emboîtement de la nervure d'emboîtement de la lentille 20 dans le drageoir 11 du cercle 14 de la monture. C'est cette deuxième méthode qui est ici présentée.

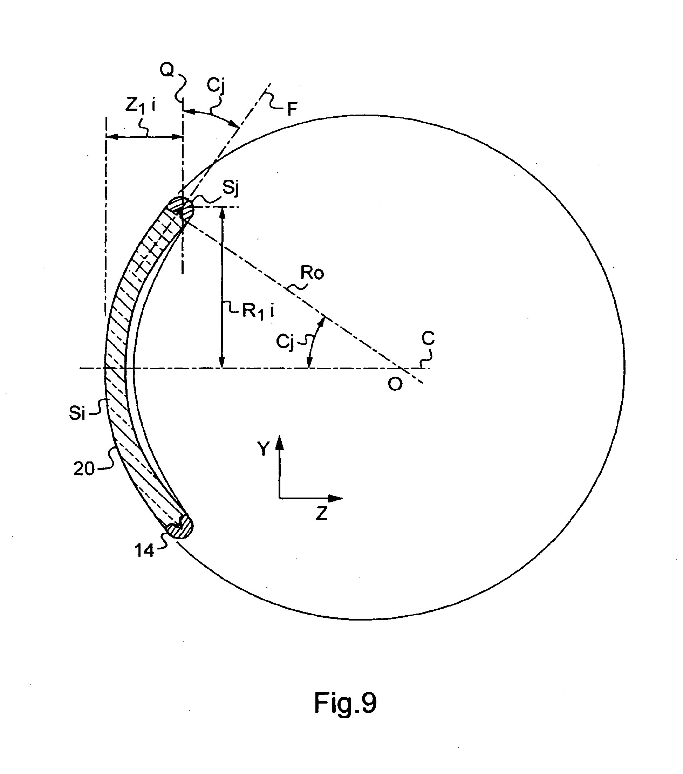

En référence à la figure 9, on sait que classiquement, le premier brin longitudinal 17 du drageoir 11 est sensiblement inscrit à la surface d'une sphère de centre O (de coordonnées $x_0$, $y_0$, $z_0$ dans un repère orthonormé quelconque) et de rayon R0. On note ici que le centre O de la sphère appartient généralement à l'axe de blocage C de la lentille ophtalmique 20.

Or, comme l'illustre la figure 9, l'angle de versage Cj d'un profil 11A d'une section transversale Sj du drageoir 11 dépend de la position du profil 11A sur la sphère. En particulier, plus le profil 11A est éloigné de l'axe de blocage C, plus son angle de versage Cj est important.

Afin de déterminer l'angle de versage Cj de chaque profil du drageoir, une solution consiste alors à déterminer, d'une part, la position du profil sur la sphère, et, d'autre part, les coordonnées $x_0$, $y_0$, $z_0$ du centre O de la sphère, ainsi que la valeur de son rayon $R_0$.

Pour déterminer ces coordonnées et ce rayon, une première méthode consiste à résoudre un système de quatre équations à quatre inconnues :

$R_0^2 = (x_j - x_0)^2 + (y_j - y_0)^2 + (z_j - z_0)^2$ , avec $x_j$, $y_j$, $z_j$ les coordonnées cartésiennes de quatre traces $P_1j$ du premier brin longitudinal 17 du drageoir 11 dans le repère orthonormé considéré.

Le premier brin longitudinal 17 n'étant en réalité pas exactement circonscrit à une sphère, le choix des quatre traces parmi l'ensemble des traces du premier brin longitudinal 17 a une influence sur le résultat du calcul. Ce calcul présente donc une précision limitée. Il est possible d'accroître cette précision en se référant, non pas à quatre traces $P_1j$ du premier brin longitudinal 17 du drageoir 11, mais à un plus grand nombre N de traces $P_1j$.

Dans cette optique, la détermination des coordonnées du centre O de la sphère et de son rayon $R_0$ se fait en minimisant la fonction f suivante :

$$f = \text{Somme} ( [(x_j - x_0)^2 + (y_j - y_0)^2 + (z_j - z_0)^2 - R_0^2]^2, \text{ pour } j \text{ allant de 1 à N})$$

Afin de minimiser cette fonction, diverses méthodes existent. Parmi celles-ci, il est possible d'utiliser la méthode du gradient conjugué dont on trouvera les explications dans l'ouvrage "Numerical Recipes in C - The art of Scientific Computing" - Second Edition édité par Cambridge University press, pages 420 à 425.

A l'issue de ces calculs, le dispositif électronique et/ou informatique possède en mémoire les caractéristiques de la sphère.

Selon une variante de l'invention, les coordonnées du centre O de la sphère et/ou la valeur de son rayon $R_0$ peuvent être acquises par l'utilisateur, à partir de la valeur de la courbure de la face avant sphérique de la lentille ophtalmique 20 (qui est fournie à l'utilisateur lors de l'achat de la lentille ou qui peut être déterminée par un palpage de la face avant de la lentille) ou à partir d'une valeur caractéristique de la cambrure globale de la monture de lunettes 10 (une monture de lunettes est généralement formée à plat, puis déformée de manière à la cambrer selon un rayon de courbure défini qui correspond globalement au rayon $R_0$ de la sphère).

Quoi qu'il en soit, le dispositif électronique et/ou informatique procède ensuite au calcul de l'angle de versage Cj du drageoir 11 en chaque section transversale Sj du drageoir 11 au moyen de la formule :

$$Cj = \arcsin ([(x_j - x_0)^2 + (y_j - y_0)^2]^{1/2} / R_0).$$

Le calcul de cet angle de versage peut permettre ensuite de directement usiner la tranche 23 de la lentille ophtalmique 20 selon le mode de réalisation précédemment décrit et représenté sur la figure 8.

Pour usiner la tranche 23 de la lentille selon le mode de réalisation précédemment décrit et représenté sur la figure 7, il convient de déterminer la configuration exacte, section par section, point par point, de l'emboîtement de la nervure d'emboîtement 24 de la lentille dans le drageoir 11.

En effet, lorsque la lentille ophtalmique 20 présente une épaisseur importante le long de sa tranche 23, les rebords 26, 27 de la tranche 23 présentent une grande largeur. On comprend alors que lorsque le drageoir est fortement versé et/ou que son rebord 14A arrière présente une largeur importante, l'arête périphérique de la face optique arrière de la lentille ophtalmique peut entrer en conflit avec ce rebord 14A de la face intérieure du cercle 14.

On se propose donc ici de déterminer la configuration exacte, point par point, de l'emboîtement de la nervure d'emboîtement 24 de la lentille dans le drageoir 11 de la monture afin d'éviter que de tels conflits apparaissent. On détermine pour cela la géométrie du profil du drageoir 11 en une pluralité de sections transversales Sj de manière à déterminer la géométrie que doit présenter le profil 23A de la tranche 23 de la lentille en une pluralité de sections axiales Si, homologues desdites sections transversales Sj.

Plus précisément, le dispositif électronique et/ou informatique 100 doit procéder au calcul des coordonnées spatiales de plusieurs points (ici au nombre de h, avec h supérieur à 5) du profil 11A du drageoir 11 en une pluralité de sections transversales Sj du drageoir.

Pour cela, le dispositif procède au palpage du profil 11A d'une première section transversale Sm du drageoir 11. Il relève ainsi les coordonnées spatiales de plusieurs points $P_1m$, $P_2m$,..., $P_nm$ du profil de cette première section Sm du drageoir 11.

Puis il en déduit, en chaque autre section transversale Sn du drageoir 11, les coordonnées spatiales de points

$P_1n, P_2n,..., P_hn$ du profil du drageoir dans chaque section Sn. Ces points sont homologues des points $P_1m, P_2m,..., P_hm$ du profil de la première section Sm du drageoir.

Connaissant l'angle de versage Cm du drageoir 11 en la première section Sm et l'angle de versage Cn de toute autre section Sn du drageoir 11, le dispositif électronique et/ou informatique 100 déduit la position des points correspondants $P_1n, P_2n,..., P_hn$ du profil de chaque autre section Sn du drageoir 11 en appliquant au vecteur [$R_im$ ; $Z_im$] des coordonnées de chaque point $P_im$ du profil de la première section du drageoir, une matrice de rotation M qui est la suivante :

$$M =[ \cos p \; ; \sin p \,] $$
$$[- \sin p \; ; \cos p] \qquad ,$$

avec p = Cn - Cm

Ces calculs permettent en particulier de déduire la largeur et la position de chaque flanc du drageoir et de chacun de ses rebords 14A, ainsi que la valeur de l'angle d'ouverture A1 du drageoir.

A ce stade de ce mode de réalisation de l'invention, le dispositif électronique et/ou informatique connaît, en chaque section axiale Si de la lentille et en chaque section transversales Sj homologue du drageoir :

- l'angle de versage Cj du drageoir,
- l'angle d'ouverture A1 du drageoir (figure 2A) qui est supposé être constant tout le long du drageoir,
- l'angle E1 que forme le profil de l'un ou l'autre des flancs obliques 24A, 24B de la nervure d'emboîtement 24 avec l'axe de blocage C (figure 2B), cet angle est calculé à partir de l'angle au sommet des surfaces de travail coniques 36, 37 de la meulette de finition 32 (figure 7),
- l'angle au sommet B1 de la nervure d'emboîtement qui est égal à Pi - 2.E1 (avec Pi = 3,14...),
- la largeur L1 du flanc avant du drageoir 11,
- la largeur L2 du flanc arrière du drageoir 11,
- la largeur L3 du rebord avant 14A de la face intérieure du cercle 14, et
- la largeur L4 du rebord arrière 14A de la face intérieure du cercle 14.

On cherche à déterminer les consignes axiale et radiale de forme du sommet 24C pour le détourage de la nervure d'emboîtement 24, en tenant compte du versage Cj du drageoir 11. On cherche en outre à déterminer les distances S1 et S2 séparant radialement le sommet 24C de la nervure d'emboîtement 24 de chacun des segments des profils des rebords avant 27 et arrière 26 de la tranche de la lentille ophtalmique 20.

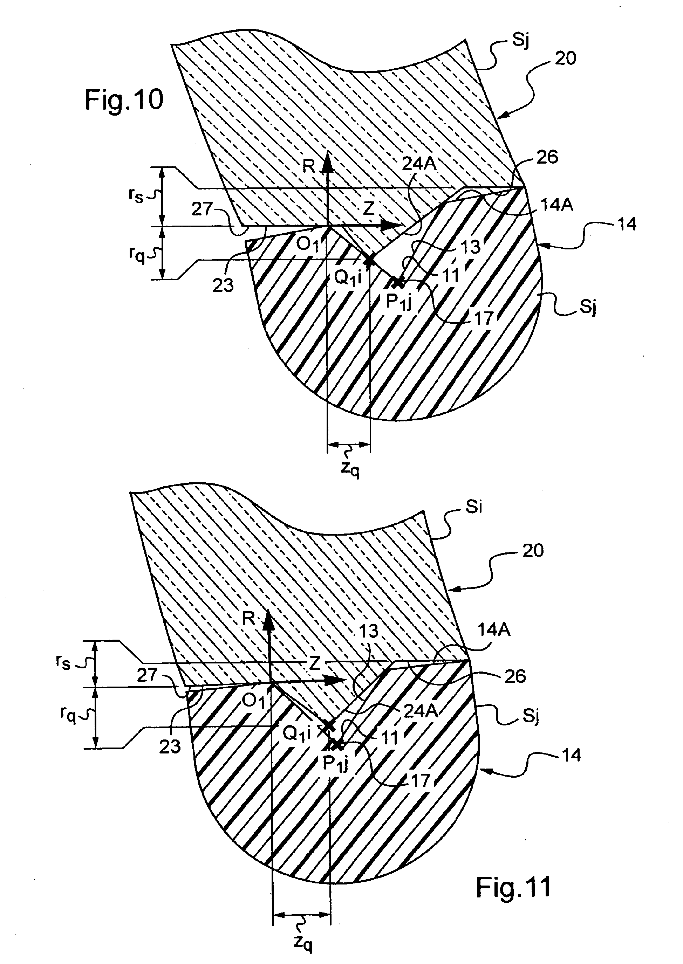

On se place pour cela, pour chaque section axiale Si de la lentille, dans un repère O1, Z, R dont l'origine O1 appartient à l'arête du drageoir 11 qui lie le flanc avant 13 du drageoir avec le rebord avant 14A correspondant (figures 10 et 11). On définit par r, z les coordonnées d'un point dans ce repère.

On détermine alors les équations dans ce repère :

- de la droite du profil du flanc avant du drageoir :

$$r = \tan (a_0) \,.\, z \text{ , avec } a_0 = A1 \,/\, 2 + Cj - Pi/2 \;;$$

- de la droite du profil du flanc arrière du drageoir :

$$r = \tan ( a_1) \,.\, z + L1 \,.\, [\sin (a_0) - \tan (a_1) \,.\, \cos (a_0)] \;,$$

avec

$$a_1 = Cj + Pi/2 - A1 \,/\, 2 \;;$$

- de la droite du profil du rebord arrière 14A :

$$r = \tan(Cj).z + L1.[\sin(a_0) - \tan(Cj).\cos(a_0)] + L2.[\sin(a_1) - \tan(Cj).\cos(a_1)]$$

- de la droite du profil du flanc arrière 24A de la nervure d'emboîtement 24 :

$$r = \tan(E1).z + L1.[\sin(a_0) - \tan(B1).\cos(a_0)] + L2.[\sin(a_1) - \tan(E1).\cos(a_1)]$$

Deux configurations d'emboîtement de la nervure d'emboîtement 24 dans le drageoir 11 de la monture sont possibles.

Dans une première configuration d'emboîtement représenté sur la figure 10, le flanc avant du drageoir est plus incliné que le flanc avant de la nervure d'emboîtement ($E1 > a_0$). Dans ce cas, les deux points de contact, dans la section considérée, de la nervure d'emboîtement sur le drageoir sont, d'une part, le point de contact du sommet $Q_1i$ de la nervure d'emboîtement 24 avec l'un des flancs du drageoir, et, d'autre part, le point de contact du flanc arrière de la nervure d'emboîtement 24 avec l'arête du drageoir 11 qui lie le flanc arrière 13 du drageoir avec le rebord avant 14A correspondant.

Dans ce cas, le sommet $Q_1i$ de la nervure d'emboîtement 24 se situe à l'intersection de la droite du profil du flanc avant du drageoir avec la droite du profil du flanc arrière 24A de la nervure d'emboîtement 24.

Il est donc possible de calculer les coordonnées de ce sommet :

$$zq = (L1.[\sin(a_0) - \tan(E1).\cos(a_0)] + L2.[\sin(a_1) - \tan(E1).\cos(a_1)]) / (\tan(a_0) - \tan(E1))$$

$$rq = \tan(E1).z_q + L1.[\sin(a_0) - \tan(E1).\cos(a_0)] + L2.[\sin(a_1) - \tan(E1).\cos(a_1)]$$

On déduit de ces coordonnées l'équation de la droite du profil du flanc avant 24B de la nervure d'emboîtement 24 :

$$r = -\tan(E1).z + r_q + \tan(E1).z_q$$

Dans une deuxième configuration d'emboîtement représentée sur la figure 11, le flanc avant du drageoir est moins incliné que le flanc avant de la nervure d'emboîtement ($E1 < a_0$). Dans ce cas, les deux points de contact, dans la section considérée, de la nervure d'emboîtement sur le drageoir sont disposés sur les arêtes à l'ouverture du drageoir.

Dans ce cas, le sommet $Q_1i$ de la nervure d'emboîtement 24 se situe à l'intersection de la droite du profil du flanc arrière 24A de la nervure d'emboîtement 24 avec la droite du profil de son flanc avant 24B.

Il est donc possible de calculer les coordonnées de ce sommet :

$$z_q = (L1.[\sin(a_0) - \tan(B1).\cos(a_0)] + L2.[\sin(a_1) - \tan(B1).\cos(a_1)]) / (-2.\tan(E1))$$

$$r_q = \tan(E1).z_q + L1.[\sin(a_0) - \tan(E1).\cos(a_0)] + L2.[\sin(a_1) - \tan(E1).\cos(a_1)]$$

A ce stade, le dispositif électronique et/ou informatique a en mémoire les coordonnées du sommet $Q_1i$ de la nervure d'emboîtement 24 et les coordonnées du fond $P_1j$ du drageoir dans le repère O1, Z, R, quelle que soit la configuration de l'emboîtement. Il détermine alors, à partir d'une matrice de changement de repères, les coordonnées d'une pluralité de traces du sommet de la nervure d'emboîtement 24 dans un même et unique référentiel, celui du dispositif d'usinage de la lentille.

Il convient alors de déterminer les distances radiales séparant le sommet de la nervure d'emboîtement 24 de chacun des deux segments du profil des rebords 26, 27 de la tranche de la lentille dans la section considérée.

Le rebord avant étant disposé au niveau de l'origine O1 du repère choisi, la distance séparant radialement le rebord avant du sommet $Q_1i$ de la nervure d'emboîtement 24 correspond à la valeur rq.

La position radiale $r_s$ du rebord arrière 26 de la tranche de la lentille est quant à elle calculée pour que ce rebord soit disposé au plus près du rebord arrière 14A du cercle 14. Le rebord arrière 26 de la lentille est donc destiné à être disposé au niveau du point du profil du drageoir dont la coordonnée r est la plus grande.

Ainsi,

$$r_s = L2.\sin(a_1) + L1.\sin(a_0) + L4.\sin(Cj) - r_q$$

Connaissant, dans le repère O1, Z, R, les coordonnées du sommet $Q_1i$ de la nervure d'emboîtement et les positions radiales par rapport à ce sommet de chacun des rebords 26, 27 de la tranche de la lentille, le dispositif 100 procède au calcul des consignes axiale et radiale de détourage de la lentille dans le repère de la meuleuse attaché à l'axe de blocage C. Il calcule en particulier les distances $T_1i$, $T_2i$ de chacun des rebords de la tranche de la lentille par rapport à l'axe de blocage C de la lentille.

Bien sûr, en variante, il est possible d'usiner un peu plus profondément les rebords de la tranche de la lentille par rapport au sommet de la nervure d'emboîtement, pour s'assurer que ces rebords n'interfèrent pas avec le cercle de la monture.

Il est également possible en variante, d'usiner le sommet de la nervure d'emboîtement pour lui conférer une forme arrondie, en en tenant compte dans les calculs précédent, de manière à solidifier ce sommet. Dans le cas contraire, le sommet risquerait, lors du montage en force de la lentille dans le cercle 14 par la face avant du cercle, d'être rogné, ce qui nuirait ensuite au maintien de la lentille 20 dans le cercle 14 de la monture de lunettes 10.

**Revendications**

1. Procédé de détourage d'une lentille ophtalmique (20), comportant l'usinage de la tranche (23) de la lentille (20) au moyen d'au moins un outil rotatif ayant un axe, l'axe de l'outil et la lentille étant mobiles l'un par rapport à l'autre en rotation autour d'un axe de blocage (C) et en translations radiale et axiale et ces mobilités étant pilotées pour que la tranche (23) de la lentille présente une forme globalement profilée, avec une nervure d'emboîtement (24) apte à s'emboîter dans un drageoir (11) d'un cercle (14) d'une monture de lunettes (10) et, de part et d'autre de cette nervure d'emboîtement (24), des premier et second rebords (26, 27),
**caractérisé en ce que**, étant donné un premier brin longitudinal (28) du premier rebord (26) et un deuxième brin longitudinal (29) du second rebord (27), la tranche (23) de la lentille (20) est usinée de telle manière que, en chaque section axiale (Si) de la lentille (20), les traces ($Q_2i$, $Q_3i$) dans cette section axiale (Si) des premier et second brins longitudinaux (28, 29) des deux rebords (26, 27) présentent respectivement des première et seconde distances ($T_1i$, $T_2i$) à l'axe de blocage (C) de la lentille (20) dont la différence est une fonction, dite de dénivelé, non entièrement uniforme de la position du plan (X) de la section axiale (Si) considéré le long de la tranche (23) de la lentille (20).

2. Procédé selon la revendication précédente, dans lequel la nervure d'emboîtement (24) étant usinée selon des consignes axiale et radiale de forme donnant respectivement, en fonction de la position du plan (X) de la section axiale (Si) considérée de la lentille (20), les positions axiale et radiale de la trace ($Q_1i$) d'un brin longitudinal directeur (25) de cette nervure d'emboîtement (24) dans cette section axiale (Si), et dans lequel ladite fonction de dénivelé incorpore au moins l'une des consignes radiale et axiale de forme du brin longitudinal directeur (25) en la section axiale (Si) considérée le long de la tranche (23) de la lentille (20).

3. Procédé selon la revendication précédente, dans lequel ladite fonction de dénivelé comporte un paramètre ($R_0$) caractéristique de la forme globale de l'une des faces optiques (21, 22) de la lentille ophtalmique (20) ou d'un brin longitudinal (17, 18, 19) du drageoir (11) du cercle (14) de la monture de lunettes (10).

4. Procédé selon la revendication précédente, dans lequel ledit paramètre caractéristique de forme comporte un rayon (R0) d'une base sphérique approchant la forme de la lentille ophtalmique (20) ou d'un brin longitudinal (17) du drageoir du cercle (14) de la monture de lunettes (10).

5. Procédé selon l'une des revendications 2 à 4, dans lequel ladite fonction de dénivelé comporte au moins un paramètre ($R_0$) qui est déduit des consignes de forme radiale et axiale du brin longitudinal directeur (25) de la nervure d'emboîtement (24).

6. Procédé selon l'une des revendications précédentes, dans lequel on acquiert par palpage avec ou sans contact la géométrie du profil (11A) du drageoir (11) du cercle en au moins une section transversale (Sj) acquise du cercle et dans lequel ladite fonction de dénivelé comporte un paramètre dépendant de la géométrie du profil (11A) ainsi acquis.

7. Procédé selon la revendication précédente, dans lequel on acquiert la forme d'un premier brin longitudinal (17) du drageoir (11), et dans lequel la position (TETAi) d'un plan de section (Y) du ou d'au moins une des sections transversales (Sj) palpées du drageoir est identifiée par calcul, à partir de la forme préalablement acquise du premier brin longitudinal (17) du drageoir (11), pour que le profil (11A) du drageoir (11) en cette section transversale (Sj) palpée présente un angle d'orientation (Cj) supérieur ou inférieur à une valeur seuil prédéfinie.

8.  Procédé selon l'une des deux revendications précédentes, dans lequel la position (TETAi) du plan de section (Y) du ou d'au moins une des sections transversales (Sj) palpées du drageoir (11) est prédéfinie ou identifiée manuellement au moyen d'une interface graphique comportant des moyens de pointage de la section transversale (Sj) à palper.

9.  Procédé selon l'une des trois revendications précédentes, comportant, préalablement à l'usinage de la tranche (23) de la lentille (20), l'acquisition d'un angle d'orientation (Cj) du profil (11A) du drageoir (11) ou de la géométrie du profil (11A) du drageoir (11) en une pluralité de sections transversales (Sj) acquises du drageoir (11).

10. Procédé de préparation au montage d'une lentille ophtalmique (20) dans un drageoir (11) de cercle (14) de monture de lunettes (10), comportant :

   - l'acquisition de la forme d'un premier brin longitudinal (17) du drageoir (11),
   - l'acquisition d'un angle d'orientation (Cj) du profil (11A) du drageoir (11) ou de la géométrie du profil (11A) du drageoir (11) en une pluralité de sections transversales (Sj) acquises du drageoir (11),
   - le détourage de la lentille ophtalmique (20) selon le procédé de la revendication 1,

   dans lequel ladite fonction de dénivelé est déduite des angles d'orientation (Cj) acquis ou des géométries acquises du profil (11A) du drageoir (11).

11. Procédé selon la revendication 10, dans lequel, pour acquérir la forme du premier brin longitudinal (17) du drageoir (11), on lit au moyen d'un palpeur (8) mécanique, continûment ou discrètement, la forme d'une arête de fond (12) du drageoir (11).

12. Procédé selon la revendication 10, dans lequel, pour acquérir la forme du premier brin longitudinal (17) du drageoir (11), on lit automatiquement un enregistrement d'un registre de base de données dont chaque enregistrement est associé à un type de monture (10) référencé et contient la forme du premier brin longitudinal (17) du drageoir (11) correspondant au type de monture référencé.

13. Procédé selon la revendication 10, dans lequel, pour acquérir la forme du premier brin longitudinal (17) du drageoir (11) et la géométrie du profil (11A) du drageoir (11), on acquiert par imagerie laser la géométrie du drageoir (11) en trois dimensions.

14. Procédé selon l'une des revendications 10 à 13, dans lequel, pour déterminer l'angle d'orientation (Cj) du profil (11A) du drageoir (11) en ladite pluralité de sections transversales (Sj) acquises de ce drageoir, on palpe le profil du drageoir en au moins deux sections transversales (Sj) palpées de ce drageoir, on calcule l'angle d'orientation (Cj) de ce profil (11A) de drageoir (11) en chacune des sections transversales (Sj) palpées, et on en déduit par interpolation l'angle d'orientation (Cj) du profil (11A) du drageoir (11) en chaque section transversale (Sj) acquise de ladite pluralité de sections transversales acquises.

15. Procédé selon la revendication précédente, dans lequel la position (TETAi) d'un plan de section (Y) d'au moins une des sections transversales (Sj) palpées du drageoir (11) est choisie par calcul, à partir de la forme préalablement acquise du premier brin longitudinal (17) du drageoir (11), pour que le profil du drageoir en cette section transversale (Sj) palpée présente un angle d'orientation (Cj) supérieur ou inférieur à une valeur seuil prédéfinie.

16. Procédé selon l'une des deux revendications précédentes, dans lequel la position (TETAi) d'un plan de section (Y) d'au moins une des sections transversales (Sj) palpées du drageoir (11) est prédéfinie ou choisie manuellement au moyen une interface graphique comportant des moyens de pointage de la section transversale (Sj) à palper.

17. Procédé selon l'une des revendications 10 à 13, dans lequel, pour déterminer l'angle d'orientation (Cj) du profil (11A) du drageoir en ladite pluralité de sections transversales (Sj) acquises du drageoir (11), on acquiert, en plus de la forme du premier brin longitudinal (17) du drageoir (11), la forme d'au moins un deuxième brin longitudinal (18, 19) du drageoir (11), décalé par rapport au premier brin longitudinal (17), et on détermine les positions relatives des premier et deuxième brins longitudinaux (17, 18).

**18.** Procédé selon la revendication précédente, dans lequel, l'acquisition de la forme des premier et deuxième brins longitudinaux (17, 18) étant réalisée par glissement d'un palpeur (8) le long du drageoir (11), les premier et second brins longitudinaux (17, 18) possédant chacun trois paramètres de forme (R, TETA, Z) correspondant à trois dimensions de l'espace, deux des paramètres de forme du deuxième brin longitudinal (18) sont déterminés en fonction de leurs homologues du premier brin longitudinal (17) et le troisième paramètre de forme est relevé lors de la lecture du deuxième brin longitudinal (18).

**19.** Procédé selon la revendication précédente, dans lequel l'un des degrés de liberté (R, Z) du palpeur (8), celui permettant au palpeur de relever ledit troisième paramètre de forme des premier et deuxième brins longitudinaux (17, 18), est piloté en rappel de manière que le palpeur (8) reste au contact du drageoir (11).

**20.** Procédé selon l'une des revendications 17 à 19, dans lequel on acquiert, en plus de la forme du premier brin longitudinal (17) et de la forme du deuxième brin longitudinal (18), la forme d'un troisième brin longitudinal (19) du drageoir (11), et on déduit l'angle d'orientation (Cj) du profil (11A) du drageoir (11) en chaque section de la pluralité de sections transversales (Sj) acquises du drageoir (11) en fonction uniquement des positions relatives des traces ($P_1j$, $P_2j$, $P_3j$) des premier, deuxième et troisième brins longitudinaux (17, 18, 19) dans ladite section.

**21.** Procédé selon l'une des revendications 9 à 20, dans lequel la nervure d'emboîtement (24) est usinée selon une consigne de rayon de détourage calculée, par simulation d'emboîtement de la nervure d'emboîtement (24) dans le drageoir (11) de la monture de lunettes (10), en fonction de l'angle d'orientation (Cj) du profil (11A) du drageoir (11) en chaque section de la pluralité de sections transversales acquises (Sj) du drageoir (11).

**22.** Procédé selon l'une des revendications 9 à 21, dans lequel la nervure d'emboîtement (24) est usinée selon une consigne axiale de détourage calculée, par simulation d'emboîtement de la nervure d'emboîtement (24) dans le drageoir (11) de la monture de lunettes (10), en fonction de l'angle d'orientation (Cj) du profil (11A) du drageoir (11) ou de la géométrie du profil (11A) du drageoir (11) en chaque section de la pluralité de sections transversales acquises (Sj) du drageoir (11).

**23.** Procédé selon l'une des revendications précédentes, dans lequel la tranche (23) de la lentille (20) est usinée de telle manière que l'orientation du profil (23A) de la tranche (23) de la lentille ophtalmique (20), par rapport à l'axe de blocage (C) de la lentille (20), varie le long de la tranche (23) de la lentille (20) selon ladite fonction de dénivelé.

**24.** Procédé selon la revendication précédente, dans lequel l'usinage de la tranche (23) de la lentille ophtalmique (20) est réalisé au moyen d'une meule (40) qui présente une gorge (41) pour usiner la nervure d'emboîtement (24) et, de part et d'autre de cette gorge (41), deux faces (42, 43) pour usiner les rebords (26, 27) et qui, pour l'usinage, tourne autour d'un axe de rotation (E) orientable par rapport à l'axe de blocage (C) de la lentille ophtalmique (20), et dans lequel la variation de l'orientation du profil de la tranche (23) de la lentille ophtalmique (20) est réalisée en pilotant l'orientation de l'axe de rotation (E) de la meule (40) par rapport à l'axe de blocage (C) de la lentille ophtalmique (20) durant l'usinage de la tranche (23) de la lentille (20).

**25.** Procédé selon l'une des revendications 1 à 22, dans lequel la tranche (23) de la lentille (20) est usinée de telle manière que, en chaque section axiale (Si) de la lentille (20), les profils des deux rebords (26, 27) s'étendent globalement suivant des droites sensiblement parallèles à l'axe de blocage (C) de la lentille ophtalmique (20).

**26.** Procédé selon la revendication précédente, dans lequel la nervure d'emboîtement (24) présentant un sommet (24C) et deux flancs obliques (24A, 24B) de part et d'autre de son sommet (24C), l'usinage de la tranche (23) de la lentille ophtalmique (20) est réalisé au moyen d'une meulette (32) comportant deux zones de travail (33, 34) chacune conformée pour usiner simultanément l'un des flancs obliques (24A, 24B) de la nervure d'emboîtement (24) et le rebord (26, 27) adjacent de la tranche (23) de la lentille ophtalmique (20), et dans lequel on pilote la position de la meulette (32) pour que chacune de ses zones de travail (33, 34) usine successivement et dissymétriquement l'un des flancs obliques (24A, 24B) de la nervure d'emboîtement (24) et le rebord (26, 27) adjacent, puis l'autre des flancs obliques (24A, 24B) de la nervure d'emboîtement (24) et le rebord (26, 27) adjacent.

**Claims**

**1.** A method of shaping an ophthalmic lens (20), the method comprising machining the edge face (23) of the lens (20) by means of at least one rotary tool having an axis, the axes of the tool and of the lens being movable relative to each other in rotation about a blocking axis (C) and in translation, both radially and axially, these freedoms of movement being controlled so that the edge face (23) of the lens presents a generally profiled shape that includes an engagement ridge (24) suitable for engaging in a bezel (11) of a rim (14) of an eyeglass frame (10), and first and second margins (26, 27) on either side of the engagement ridge (24),

the method being **characterized in that** given a first longitudinal curve (28) of the first margin (26) and a second longitudinal curve (29) of the second margin (27), the edge face (23) of the lens (20) is machined in such a manner that, at each axial section (Si) of the lens (20), the traces ($Q_2i$, $Q_3i$) in said axial section (Si) of the first and second longitudinal curves (28, 29) of the two margins (26, 27) present respective first and second distances ($T_1i$, $T_2i$) from the blocking axis (C) of the lens (20), with the difference therebetween being a function, referred to as an "altitude difference function", of the position of the plane (X) of the axial section (Si) under consideration along the edge face (23) of the lens (20), which function is not entirely uniform.

2. A method according to the preceding claim, wherein the engagement ridge (24) is machined in compliance with axial and radial shape setpoints giving, as a function of the position of the plane (X) of the axial section (Si) under consideration of the lens (20), respectively the axial and radial positions of the trace ($Q_1i$) of a directing longitudinal curve (25) of said engagement ridge (24) in said axial section (Si), and wherein said altitude difference function incorporates at least one of the axial and radial setpoints for the shape of the directing longitudinal curve (25) in the axial section (Si) under consideration along the edge face (23) of the lens (20).

3. A method according to the preceding claim, wherein said altitude difference function includes a parameter ($R_0$) that is characteristic of the overall shape of one of the optical faces (21, 22) of the ophthalmic lens (20) or of a longitudinal curve (17, 18, 19) of the bezel (11) of the rim (14) of the eyeglass frame (10).

4. A method according to the preceding claim, wherein said parameter characteristic of shape comprises a radius ($R_0$) of a spherical base approximating to the shape of the ophthalmic lens (20), or of a longitudinal curve (17) of the bezel of the rim (14) of the eyeglass frame (10).

5. A method according to any one of claims 2 to 4, wherein said altitude difference function includes at least one parameter ($R_0$) that is deduced from the radial and axial shape setpoints for the directing longitudinal curve (25) of the engagement ridge (24).

6. A method according to any preceding claim, wherein the shape of the profile (11A) of the bezel (11) of the rim is obtained by feeling, with or without making contact, at at least one acquired cross-section (Sj) of the rim, and wherein said altitude difference function includes a parameter depending on the shape of the profile (11A) acquired in this way.

7. A method according to the preceding claim, wherein the shape of a first longitudinal curve (17) of the bezel (11) is obtained, and wherein the position (TETAi) of a section plane (Y) of the, or of at least one of the, felt cross-sections (Sj) of the bezel is identified by calculation, on the basis of the previously acquired shape of the first longitudinal curve (17) of the bezel (11), so that the profile (11A) of the bezel (11) in said felt cross-section (Sj) presents a skew angle (Cj) greater than or less than a predefined threshold value.

8. A method according to either one of the two preceding claims, wherein the position (TETAi) of the section plane (Y) of the, or of at least one of the, felt cross-sections (Sj) of the bezel (11) is predefined or is identified manually by means of a graphics interface including means for pointing to the cross-section (Sj) that is to be felt.

9. A method according to any one of the three preceding claims, including, prior to machining the edge face (23) of the lens (20), acquiring a skew angle (Cj) of the profile (11A) of the bezel (11) or the shape of the profile (11A) of the bezel (11) at a plurality of acquired cross-sections (Sj) of the bezel (11).

10. A method of preparing an ophthalmic lens (20) for mounting in a bezel (11) of a rim (14) of an eyeglass frame (10), the method comprising:

- acquiring the shape of a first longitudinal curve (17) of the bezel (11);
- acquiring a skew angle (Cj) of the profile (11A) of the bezel (11) or the shape of the profile (11A) of the bezel (11) at a plurality of acquired cross-sections (Sj) of the bezel (11); and
- shaping the ophthalmic lens (20) according to the method of claim 1;

wherein said altitude difference function is deduced from the acquired skew angles (Cj) or from the acquired shapes of the profile (11A) of the bezel (11).

11. A method according to claim 10, wherein, in order to acquire the shape of the first longitudinal curve (17) of the bezel (11), a mechanical feeler (8) is used to read the shape of a bottom edge (12) of the bezel (11), either continuously or discretely.

12. A method according to claim 10, wherein, in order to acquire the shape of the first longitudinal curve (17) of the bezel (11), a record is read automatically from a database register in which each record is associated with a referenced type of frame (10) and contains the shape of the first longitudinal curve (17) of the bezel (11) corresponding to the referenced type of frame.

13. A method according to claim 10, wherein, in order to acquire the shape of the longitudinal curve (17) of the bezel (11) and the shape of the profile (11A) of the bezel (11), a laser imaging is used to acquire the shape of the bezel (11) in three dimensions.

14. A method according to any one of claims 10 to 13, wherein, in order to determine the skew angle (Cj) of the profile (11A) of the bezel (11) at said plurality of acquired cross-sections (Sj) of said bezel, a bezel profile is felt at at least two felt cross-sections (Sj) of said bezel, the skew angle (Cj) of the profile (11A) of the bezel (11) is calculated at each of the felt cross-sections (Sj), and the skew angle (Cj) of the profile (11A) of the bezel (11) at each acquired cross-section (Sj) of said plurality of acquired cross-sections is deduced therefrom by interpolation.

15. A method according to the preceding claim, wherein the position (TETAi) of a section plane (Y) of at least one of the felt cross-sections (Sj) of the bezel (11) is selected by calculation on the basis of the previously acquired shape of the first longitudinal curve (17) of the bezel (11), so that the profile of the bezel in said felt cross-section (Sj) presents a skew angle (Cj) greater than or less than a predefined threshold value.

16. A method according to either one of the two preceding claims, wherein the position (TETAi) of a section plane (Y) of at least one of the felt cross-sections (Sj) of the bezel (11) is predefined or is selected manually by means of a graphics interface including means for pointing to the cross-section (Sj) that is to be felt.

17. A method according to any one of claims 10 to 13, wherein, in order to determine the skew angle (Cj) of the profile (11A) of the bezel at said plurality of acquired cross-sections (Sj) of the bezel (11), in addition to acquiring the shape of the first longitudinal curve (17) of the bezel (11), the shape is also acquired of at least one second longitudinal curve (18, 19) of the bezel (11), said curve being offset relative to the first longitudinal curve (17), and the relative positions of the first and second longitudinal curves (17, 18) are determined.

18. A method according to the preceding claim, wherein, the shapes of the first and second longitudinal curves (17, 18) are acquired by sliding a feeler (8) along the bezel (11), each of the first and second longitudinal curves (17, 18) possessing three shape parameters (R, TETA, Z) corresponding to three dimensions in space, two of these shape parameters of the second longitudinal curve (18) being determined as a function of the corresponding parameters of the first longitudinal curve (17), and the third shape parameter being sensed while reading the second longitudinal curve (18).

19. A method according to the preceding claim, wherein one of the degrees of freedom (R, Z) of the feeler (8), the degree of freedom enabling the feeler to read said third shape parameter of the first and second longitudinal curves (17, 18), is controlled with bias to ensure that the feeler (8) remains in contact with the bezel (11).

20. A method according to any one of claims 17 to 19, wherein, in addition to acquiring the shape of the first longitudinal curve (17) and the shape of the second longitudinal curve (18), the shape of a third longitudinal curve (19) of the bezel (11) is also acquired, and the skew angle (Cj) of the profile (11A) of the bezel (11) is deduced at each section of the plurality of acquired cross-sections (Sj) of the bezel (11) as a function solely of the relative positions of the traces ($P_1j$, $P_2j$, $P_3j$) of the first, second, and third longitudinal curves (17, 18, 19) in said section.

21. A method according to any one of claims 9 to 20, wherein the engagement ridge (24) is machined in compliance with a shaping radius setpoint that is calculated by simulating engagement of the engagement ridge (24) in the bezel (11) of the eyeglass frame (10) as a function of the skew angle (Cj) of the profile (11A) of the bezel (11) at each section of the plurality of acquired cross-sections (Sj) of the bezel (11).

22. A method according to any one of claims 9 to 21, wherein the engagement ridge (24) is machined in compliance with a shaping axial setpoint that is calculated by simulating the engagement of the engagement ridge (24) in the bezel (11) of the eyeglass frame (10) as a function of the skew angle (Cj) of the profile (11A) of the bezel (11) or as a function of the shape of the profile (11A) of the bezel (11) at each section of the plurality of acquired cross-sections (Sj) of the bezel (11).

23. A method according to any preceding claim, wherein the edge face (23) of the lens (20) is machined in such a manner that the orientation of the profile (23A) of the edge face (23) of the ophthalmic lens (20) relative to the blocking axis (C) of the lens (20) varies along the edge face (23) of the lens (20) in accordance with said altitude difference function.

24. A method according to the preceding claim, wherein the machining of the edge face (23) of the ophthalmic lens (20) is performed by means of a grindwheel (40) that presents a groove (41) for machining the engagement ridge (24), together with two faces (42, 43) on either side of said groove (41) for the purpose of machining the margins (26, 27), and that, during machining, rotates about an axis of rotation (C) that can be oriented relative to the blocking axis (C) of the ophthalmic lens (20), and wherein the variation in the orientation of the profile of the edge face (23) of the ophthalmic lens (20) is obtained by controlling the orientation of the axis of rotation (C) of the grindwheel (40) relative to the blocking axis (C) of the ophthalmic lens (20) while machining of the edge face (23) of the lens (20).

25. A method according to any one of claims 1 to 22, wherein the edge face (23) of the lens (20) is machined in such a manner that, at each axial section (Si) of the lens (20), the profiles of the two margins (26, 27) extend generally along straight lines that are substantially parallel to the blocking axis (C) of the ophthalmic lens (20).

26. A method according to the preceding claim, wherein the engagement ridge (24) presents a peak (24C) and two sloping flanks (24A, 24B) on either side of the peak (24C), the edge face (23) of the ophthalmic lens (20) is machined by means of a wheel (32) having two working zones (33, 34), each shaped to machine simultaneously one of the sloping flanks (24A, 24B) of the engagement ridge (24) and the adjacent margin (26, 27) of the edge face (23) of the ophthalmic lens (20), and wherein the position of the wheel (32) is controlled so that each of its working zones (33, 34) machines successively and asymmetrically one of the sloping flanks (24A, 24B) of the engagement ridge (24) and the adjacent margin (26, 27), and then the other sloping flanks (24A, 24B) of the engagement ridge (24) and the adjacent margin (26, 27).

**Patentansprüche**

1. Zuschneideverfahren für ein Brillenglas (20), das die Bearbeitung des Randes (23) des Brillenglases (20) mittels mindestens einem Drehwerkzeug mit einer Achse umfasst, wobei die Achse des Werkzeugs und das Brillenglas zueinander um eine Blockierachse (C) drehbar sowie hinsichtlich radialer und axialer Translationen beweglich sind und diese Bewegungen so gesteuert werden, dass der Rand (23) des Brillenglases eine im allgemeinen profilierte Form aufweist, mit einer Abschrägung (24), die sich in eine Fuge (11) eines Kreises (14) einer Brillenfassung (10) einfügen lässt und mit beiderseits dieser Abschrägung (24) ersten und zweiten Kanten (26,27), **dadurch gekennzeichnet**, in Anbetracht eines ersten Längsfaden (28) der ersten Kante (26) und eines zweiten Längsfaden (29) der zweiten Kante (27), der Rand (23) des Brillenglases (20) so bearbeitet wird, dass in jedem axialen Abschnitt (Si) des Brillenglases (20) die Linien (Q$_2$i, Q$_3$i) in diesem axialen Abschnitt (Si) der ersten und zweiten Längsfaden (28,29) der beiden Kanten (26,27) jeweils einen ersten und zweiten Abstand (T$_1$i, T$_2$i) zur Blockierachse (C) des Brillenglases aufweisen, deren Differenz eine sogenannte Höhenunterschiedsfunktion ist, die nicht ganz gleichförmig der Position der Ebene (X) des axialen Abschnitts (Si) ist, betrachtet entlang des Randes (23) des Brillenglases (20).

2. Verfahren nach dem vorausgehenden Anspruch, bei dem die Abschrägung (24) gemäß axialen und radialen Formvorgaben eingearbeitet wird, die jeweils in Abhängigkeit der Position der Ebene (X) des betrachteten axialen Abschnitts (Si) des Brillenglases (20) die axialen und radialen Positionen der Linie (Q$_1$i) eines maßgeblichen Längsfaden (25) dieser Abschrägung (24) in diesem axialen Abschnitt (Si) vorgibt, und bei dem diese Höhenunterschiedsfunktion mindestens eine der radialen und axialen Formvorgaben des maßgeblichen Längsfaden (25) in dem entlang des Randes (23) des Brillenglases (20) betrachteten axialen Abschnitt (Si) einbezieht.

3. Verfahren nach dem vorausgehenden Anspruch, bei dem diese Höhenunterschiedsfunktion einen charakteristischen Parameter (R$_0$) der globalen Form einer der optischen Seiten (21,22) des Brillenglases (20) oder eines Längsfaden (17,18,19) der Fuge (11) des Kreises (14) der Brillenfassung (10) umfasst.

4. Verfahren nach dem vorausgehenden Anspruch, bei dem der charakteristische Formparameter einen Radius (R0) einer sphärischen Grundform umfasst, die der Form des Brillenglases (20) oder eines Längsfaden (17) der Kreisfuge (14) der Brillenfassung (10) ähnlich ist.

5. Verfahren nach einem der Ansprüche 2 bis 4, bei dem diese Höhenunterschiedsfunktion mindestens einen Parameter ($R_0$) umfasst, der von den radialen und axialen Formvorgaben des maßgebenden Längsfaden (25) der Abschrägung (24) abgeleitet wird.

6. Verfahren nach einem der vorausgehenden Ansprüche, bei dem man durch berührungsloses Abtasten oder Abtasten mit Berührung die Geometrie des Profils (11A) der Kreisfuge (11) in mindestens einem erfassten Querabschnitt (Sj) des Kreises erfasst und bei dem die Höhenunterschiedsfunktion einen von der so erfassten Geometrie des Profils (11A) abhängigen Parameter umfasst.

7. Verfahren nach dem vorausgehenden Anspruch, bei dem man die Form eines ersten Längsfaden (17) der Fuge (11) erfasst, und bei dem die Position (TETAi) einer Abschnittsebene (Y) der Fuge oder von mindestens einem der abgetasteten Querabschnitte (Sj) der Fuge durch Berechnung ausgehend von der vorab erfassten Form des ersten Längsfaden (17) der Fuge (11) ermittelt wird, damit das Profil (11A) der Fuge (11) in diesem abgetasteten Querabschnitt (Sj) einen Orientierungswinkel (Cj) aufweist, der größer oder kleiner ist als ein vordefinierter Grenzwert.

8. Verfahren nach einem der beiden vorausgehenden Ansprüche, bei dem die Position (TETAi) der Abschnittsebene (Y) der Fuge oder von mindestens einem der abgetasteten Querabschnitte (Sj) der Fuge (11) vordefiniert ist oder mittels einer grafischen Schnittstelle mit Ausrichtmitteln des abzutastenden Querabschnitts (Sj) manuell ermittelt wird.

9. Verfahren nach einem der drei vorausgehenden Ansprüche, das im Vorfeld der Bearbeitung des Randes (23) des Brillenglases (20) die Erfassung eines Orientierungswinkels (Cj) des Profils (11A) der Fuge (11) oder der Geometrie des Profils (11A) der Fuge (11) in einer Vielzahl von der Fuge (11) erfassten Querabschnitten (Sj) umfasst.

10. Vorbereitendes Verfahren für die Montage eines Brillenglases (20) in einer Fuge (11) des Kreises (14) der Brillenfassung (10), das umfasst:

   - Erfassen der Form eines ersten Längsfaden (17) der Fuge (11),
   - Erfassen eines Orientierungswinkels (Cj) des Profils (11A) der Fuge (11) oder der Geometrie des Profils (11A) der Fuge (11) in einer Vielzahl von der Fuge (11) erfassten Querabschnitten (Sj),
   - Zuschneiden des Brillenglases (20) gemäß dem Verfahren nach Anspruch 1,

   bei dem die Höhenunterschiedsfunktion von den erfassten Orientierungswinkeln (Cj) oder den erfassten Geometrien des Profils (11A) der Fuge (11) abgeleitet wird.

11. Verfahren nach Anspruch 10, bei dem man zum Erfassen der Form des ersten Längsfaden (17) der Fuge (11) mittels einem mechanischen Abtaster (8) die Form einer Bodenkante (12) der Fuge (11) kontinuierlich oder Punkt für Punkt abliest.

12. Verfahren nach Anspruch 10, bei dem man zum Erfassen der Form des ersten Längsfaden (17) der Fuge (11) automatisch einen Speicherwert eines Datenbankregisters abliest, wobei jeder Speicherwert mit einer speziellen Art von referenzierten Brillenfassungen (10) assoziiert ist und die Form des ersten Längsfaden (17) der Fuge (11) entsprechend der speziellen Art der referenzierten Brillenfassungen enthält.

13. Verfahren nach Anspruch 10, bei dem man zum Erfassen der Form des ersten Längsfaden (17) der Fuge (11) und der Geometrie des Profils (11A) der Fuge (11) durch eine Bildgebungstechnik per Laser die Geometrie der Fuge (11) in drei Dimensionen erfasst.

14. Verfahren nach einem der Ansprüche 10 bis 13, bei dem man zum Bestimmen des Orientierungswinkels (Cj) des Profils (11A) der Fuge (11) in der Vielzahl von dieser Fuge erfassten Querabschnitten (Sj) das Profil der Fuge in mindestens zwei abgetasteten Querabschnitten (Sj) dieser Fuge abtastet, man den Orientierungswinkel (Cj) dieses Profils (11A) der Fuge (11) in allen abgetasteten Querabschnitten (Sj) berechnet, und man davon durch Interpolation den Orientierungswinkel (Cj) des Profils (11A) der Fuge (11) in allen erfassten Querabschnitten (Sj) der Vielzahl der erfassten Querabschnitten ableitet.

15. Verfahren nach dem vorausgehenden Anspruch, bei dem die Position (TETAi) einer Abschnittsebene (Y) von mindestens einem der abgetasteten Querabschnitte (Sj) der Fuge (11) durch Berechnung ausgehend von der vorab erfassten Form des ersten Längsfaden (17) der Fuge (11) ausgewählt wird, damit das Profil der Fuge in diesem abgetasteten Querabschnitt (Sj) einen Orientierungswinkel (Cj) aufweist, der größer oder kleiner als ein vordefinierter Grenzwert ist.

16. Verfahren nach einem der beiden vorausgehenden Ansprüche, bei dem die Position (TETAi) einer Abschnittsebene (Y) von mindestens einem der abgetasteten Querabschnitte (Sj) der Fuge (11) vordefiniert ist oder mittels einer grafischen Schnittstelle mit Ausrichtmitteln des abzutastenden Querabschnitts (Sj) manuell ausgewählt wird.

17. Verfahren nach einem der Ansprüche 10 bis 13, bei dem man zum Bestimmen des Orientierungswinkels (Cj) des Profils (11A) der Fuge in der Vielzahl von erfassten Querabschnitten (Sj) der Fuge (11) zusätzlich zur Form des ersten Längsfaden (17) der Fuge (11) die Form von mindestens einem zweiten längslaufenden Abschnitt (18,19) der Fuge (11) erfasst, der in Bezug zum ersten längslaufenden Abschnitt (17) versetzt ist, und bei dem man die relativen Positionen des ersten und zweiten Längsfaden (17,18) ermittelt.

18. Verfahren nach dem vorausgehenden Anspruch, bei dem die Erfassung der Form des ersten und zweiten Längsfaden (17,18) durch Gleiten eines Abtasters (8) entlang der Fuge (11) realisiert wird, wobei der erste und zweite längslaufende Abschnitt (17,18) jeweils drei Formparameter (R, TETA, Z) besitzen, die drei Raumdimensionen entsprechen, wobei zwei Formparameter des zweiten Längsfaden (18) in Abhängigkeit der entsprechenden Parameter des ersten Längsfaden (17) bestimmt werden und der dritte Formparameter beim Ablesen des zweiten Längsfaden (18) aufgenommen wird.

19. Verfahren nach vorausgehendem Anspruch, bei dem einer der Freiheitsgrade (R,Z) des Abtasters (8) - der, der dem Abtaster ermöglicht, den dritten Formparameter des ersten und zweiten Längsfaden (17,18) aufzunehmen - so mit einer Rückstellkraft gesteuert wird, dass der Abtaster (8) mit der Fuge (11) in Kontakt bleibt.

20. Verfahren nach einem der Ansprüche 17 bis 19, bei dem man zusätzlich zur Form des ersten Längsfaden (17) und der Form des zweiten Längsfaden (18) die Form eines dritten Längsfaden (19) der Fuge (11) erfasst, und man in jedem Abschnitt der Vielzahl der erfassten Querabschnitte (Sj) der Fuge (11) den Orientierungswinkel (Cj) des Profils (11A) der Fuge (11) ausschließlich in Abhängigkeit der relativen Positionen der Linien ($P_1j$, $P_2j$, $P_3j$) des ersten, zweiten und dritten Längsfaden (17, 18, 19) im jeweiligen Abschnitt ableitet.

21. Verfahren nach einem der Ansprüche 9 bis 20, bei dem die Abschrägung (24) gemäß einer berechneten Radiusvorgabe für das Zuschneiden durch Simulieren des Einfügens der Abschrägung (24) in die Fuge (11) der Brillenfassung (10) in Abhängigkeit des Orientierungswinkels (Cj) des Profils (11A) der Fuge (11) in jedem Abschnitt der Vielzahl der erfassten Querabschnitte (Sj) der Fuge (11) eingearbeitet wird.

22. Verfahren nach einem der Ansprüche 9 bis 21, bei dem die Abschrägung (24) gemäß einer berechneten axialen Vorgabe für das Zuschneiden durch Simulieren des Einfügens der Abschrägung (24) in die Fuge (11) der Brillenfassung (10) in Abhängigkeit des Orientierungswinkels (Cj) des Profils (11A) der Fuge (11) oder der Geometrie des Profils (11A) der Fuge (11) in jedem Abschnitt der Vielzahl der erfassten Querabschnitte (Sj) der Fuge (11) eingearbeitet wird.

23. Verfahren nach einem der vorausgehenden Ansprüche, bei dem der Rand (23) des Brillenglases (20) so bearbeitet wird, dass die Orientierung des Profils (23A) des Randes (23) des Brillenglases (20) in Bezug auf die Blockierachse (C) des Brillenglases (20) entlang des Randes (23) des Brillenglases (20) gemäß der Höhenunterschiedsfunktion variiert.

24. Verfahren nach vorausgehendem Anspruch, bei dem die Bearbeitung des Randes (23) des Brillenglases (20) mittels einem Schleifstein (40) mit einer Vertiefung (41) zur Bearbeitung der Abschrägung (24) realisiert wird, und mit beiderseits dieser Vertiefung (41) zwei Seiten (42,43) zur Bearbeitung der Kanten (26,27) und welcher sich zur Bearbeitung um eine Drehachse (E) dreht, die in Bezug auf die Blockierachse (C) des Brillenglases (20) orientierbar ist, und bei dem das Variieren der Orientierung des Profils des Randes (23) des Brillenglases (20) durch Lenken der Orientierung der Drehachse (E) des Schleifsteins (40) in Bezug auf die Blockierachse (C) des Brillenglases (20) während der Bearbeitung des Randes (23) des Brillenglases (20) realisiert wird.

25. Verfahren nach einem der Ansprüche 1 bis 22, bei dem der Rand (23) des Brillenglases (20) so bearbeitet wird, dass sich in jedem axialen Abschnitt (Si) des Brillenglases (20) die Profile der beiden Kanten (26,27) im Allgemeinen entlang von im wesentlichen zur Blockierachse (C) des Brillenglases (20) parallelen Geraden erstrecken.

26. Verfahren nach vorausgehendem Anspruch, bei dem die Abschrägung (24) einen Scheitelpunkt (24C) und auf beiden Seiten davon zwei schräge Seitenflanken (24A,24B) aufweist und die Bearbeitung des Randes (23) des Brillenglases (20) mittels einer Schleifscheibe (32) mit zwei Arbeitsbereichen (33, 34) realisiert wird, die beide zusammen so gestaltet sind, um gleichzeitig eine der schrägen Seitenflanken (24A, 24B) der Abschrägung (24) und die angrenzende Kante (26,27) des Randes (23) des Brillenglases zu bearbeiten, und bei dem man die Position der Schleifscheibe (32) so steuert, dass jeder ihrer Arbeitsbereiche (33, 34) nacheinander und asymmetrisch eine der schrägen Seitenflanken (24A, 24B) der Abschrägung (24) und die angrenzende Kante (26,27) und anschließend die andere der schrägen Seitenflanken (24A, 24B) der Abschrägung (24) und die angrenzende Kante (26,27) bearbeitet.

Fig.1

Fig.2A

Fig.2B

Fig.3A

Fig.3B

Fig.4A

Fig.4B

Fig.5A

Fig.5B

Fig.6A

Fig.6B

Fig.7

Fig.8

EP 2 077 927 B1

Fig.9

Fig.10

Fig.11

## RÉFÉRENCES CITÉES DANS LA DESCRIPTION

**Documents brevets cités dans la description**

- EP 0819967 A
- EP 0750172 A
- EP 1353141 A

**Littérature non-brevet citée dans la description**

- Numerical Recipes in C - The art of Scientific Computing. Cambridge University press, 420-425